# EUROPEAN PATENT APPLICATION

(11) **EP 4 439 249 A1**
(43) Date of publication of application: **02.10.2024**
(21) Application number: 24166022.4
(22) Date of filing: 25.03.2024
(51) Int. Cl.: G06F 3/01

(54) **EASY-TO-REMEMBER INTERACTION MODEL USING IN-AIR HAND GESTURES TO CONTROL ARTIFICIAL-REALITY HEADSETS, AND METHODS OF USE THEREOF**

(30) Priority: 31.03.2023 US 202363493697 P; 13.03.2024 US 202418604424
(71) Applicant: Meta Platforms Technologies, LLC, Menlo Park, CA 94025 (US)
(72) Inventor: Huang, Willy, Menlo Park (US)
(74) Representative: Murgitroyd & Company

(57) **Abstract**

One example of a method of using thumb-based gestures to navigate within and between applications is described herein. The method comprises causing presentation of application content associated with an application to a user of a wrist-wearable device, the wrist-wearable device comprising a biopotential-signal-sensing component. The method comprises, in response to receiving a first indication, based on data from the biopotential-signal-sensing component, that a thumb of the user is moving in a first direction on a portion of a hand of the user, causing presentation of different application content associated with the application. And the method comprises, in response to receiving a second indication, based on data from the biopotential-signal-sensing component, that the thumb of the user is moving in a second direction, on the portion of the hand of the user, causing presentation of other application content associated with another application, the other application distinct from the application.

## Description

### RELATED APPLICATIONS

This application claims priority to U.S. Prov. App. No. 63/493,697, filed on March 31, 2023, and entitled "Easy-To-Remember Interaction Model Using In-Air Hand Gestures To Control Artificial-Reality Headsets, And Methods Of Use Thereof".

### TECHNICAL FIELD

This disclosure relates generally to hand gestures that correspond to user commands electronic devices, including but not limited to techniques for interpreting hand gestures that include thumb movements corresponding to intra-application operations and inter-application operations to be performed at an electronic device that is in electronic communication with sensors configured to detect the respective thumb movements.

This disclosure also relates generally to gestures spaces for interacting with electronic devices (e.g., wearable electronic devices, such as wrist-wearable devices, that include sensors for detecting the respective gestures of the gesture space), including but not limited to techniques for interpreting hand gestures that include thumb movements and/or contacts between a user's thumb and one or more fingers of the user's hand.

This disclosure also relates generally to techniques for navigating between different user interfaces based on an ordered user interface system, including but not limited to sensing a biopotential signal corresponding to a gesture that includes movement of a particular finger of the user's hand, where the movement of the particular finger of the user's hand corresponds to a predefined universal home gesture.

### BACKGROUND

Wearable electronic devices are gaining popularity, and provide unique advantages for users. Specifically, wearable electronic devices allow for digital interactions on-the-go, as well as additional sensing capabilities. Some wearable electronic devices allow users to provide user inputs via, e.g., buttons on a peripheral surface of the device, or a touch-sensitive surface, which may be part of a display of the electronic device. But these techniques for interacting with wearable electronic devices can be cumbersome and/or impractical at least because they cause inefficient use of computing resources and/or energy capacity at the wearable electronic devices.

Further, wearable devices often have with smaller screens than other portable electronic devices, limited battery life, and/or limited computing resources, the above-identified issues can be especially problematic. Thus, explorations around defining gesture spaces based on an intuitive set of hand gestures are needed.

Thus, there is a need to address one or more of the above-identified challenges. A brief summary of solutions to the issues noted above are described below.

### SUMMARY

The present invention provides a non-transitory, computer-readable storage medium, a method of using thumb-based gestures to navigate within and between applications and a wrist-wearable device as defined in the appended claims.

As such, it would be desirable to address one or more of the above-identified issues, drawbacks, or areas for further exploration by providing intuitive and efficient gesture detection and/or recognition capabilities for various types of user interfaces (including user interfaces presented on screens for wearable devices and other electronic devices as well as for user interfaces (e.g., artificial-reality user interfaces) presented via artificial-reality devices, including artificial-reality headsets). For example, if a user is wearing a wrist-wearable device that is configured to detect biopotential signals (e.g., neuromuscular signals) at sensor-skin interfaces of a wrist of a user, but is also wearing an artificial-reality headset (e.g., augmented-reality glasses) that are configured to present user interfaces to the user, then there is no need for the wrist-wearable device to present user interfaces via a display of the wrist-wearable device, even if such a component is present at the wrist-wearable device. Further, even if the wrist-wearable device is displaying, via a display, a user interface, the display may be small and cumbersome to interact with. And there may be limited resources for receiving such inputs via the touch-sensitive display. Therefore, it may be more intuitive, efficient, and/or less cumbersome to interact with a particular user interface via hand gestures that do not include interactions with a display of the wrist wearable device.

The devices, systems, and methods of use thereof provided in this disclosure allow for sustained interactions and more efficient man-machine interfaces for users as the users interact with the wearable devices, including wrist-wearable devices and artificial-reality headsets. Existing user interfaces can require users to perform tedious and cumbersome user inputs at touch-sensitive surfaces of two-dimensional screens and/or mechanical devices in electronic communication with the two-dimensional screens. Problems associated with repeated use of such two-dimensional screens and/or mechanical devices for actuating inputs are well-documented. For example, repeated use of such input methodologies can cause users to develop repetitive motion disorders, such as carpal tunnel syndrome. Such problems are addressed by providing a user interface that can be interacted with via hand gestures that do not require inputs at a touch-sensitive screen and/or a mechanical input component, as well as defining and implementing gesture spaces that are designed to be intuitive and to facilitate sustained user interactions and improved man-machine interfaces.

In accordance with a first aspect, there is provided a non-transitory, computer-readable storage medium comprising instructions that, when executed by an electronic device, cause performance of operations for:
causing presentation of application content associated with an application to a user of a wrist-wearable device, the wrist-wearable device comprising a biopotential-signal-sensing component;
in response to receiving a first indication, based on data from the biopotential-signal-sensing component, that a thumb of the user is moving in a first direction on a portion of a hand of the user, causing presentation of different application content associated with the application; and
in response to receiving a second indication, based on data from the biopotential-signal-sensing component, that the thumb of the user is moving in a second direction, distinct from the first direction, on the portion of the hand of the user, causing presentation of other application content associated with another application, the other application distinct from the application.

The first direction may be substantially perpendicular to the second direction.

The first direction may be a horizontal direction starting along a major dimension of an index finger of the user; and
the second direction may be a vertical direction starting along a minor dimension of the index finger of the user.

The other application content may be caused to be presented with a focus selector directed to a selectable user interface element within the other application content, and
the instructions, when executed by the electronic device, may further cause performance of operations for:
while the other application content is being presented to the user and the focus selector is directed to the selectable user interface element within the other application content:
in response to receiving a third indication, based on data from the biopotential-signal-sensing component, that the thumb of the user is providing a press contact against the portion of the hand of the user, causing performance of an operation associated with the selectable user interface element.

The instructions, when executed by the electronic device, may further cause performance of operations for:
while the other application content is being presented:
in conjunction with detecting the third indication that the thumb of the user is providing the press contact, causing an adjustment to a visual characteristic used to present the selectable user interface element as part of the other application content currently being displayed to the user.

Causing the adjustment to the visual characteristic used to present the selectable user interface element may comprise causing presentation of a zoomed-in selection interface; and
the zoomed-in selection interface may comprise selectable user interface elements associated with a set of actions presented within a user interface, including the selectable user interface element that remains in focus within the zoomed-in selection interface.

The press contact by the thumb of the user against the portion of the hand of the user may comprise a sustained hold of the press contact, and the instructions, when executed by the electronic device, may further cause performance of operations for:
while the zoomed-in selection interface is caused to be presented to the user and the sustained hold of the press contact is being maintained, receiving an indication of a translational movement of the hand;
in response to receiving the indication of the translational movement of the hand, adjusting the zoomed-in selection interface such that the focus selector is no longer directed to the selectable user interface element that previously remained in focus, and the focus selector is caused to be directed to a different selectable user interface element within the zoomed-in selection interface; and
while the focus selector is directed to the different selectable user interface element within the zoomed-in selection interface, and in response to a release of the press contact, causing an operation to be performed corresponding to the different selectable user interface element.

The instructions, when executed by the electronic device, may further cause performance of operations for:
while the other application content is being presented, and before causing performance of the operation associated with the selectable user interface element:
in response to receiving a fourth indication, via the biopotential-signal-sensing component, that the thumb of the user is providing a press contact against another portion of the hand of the user, distinct from the portion, causing performance of a secondary operation, distinct from the operation, associated with the selectable user interface element.

The instructions, when executed by the electronic device, may further cause performance of operations for:
while the other application content is being caused to be presented to the user:
in response to receiving a fifth indication, based on a sensor distinct biopotential-signal-sensing component, of a translational movement of the hand, causing movement of the focus selector to be directed to a different selectable user interface element, distinct from the selectable user interface element, within the other application content.

The movement of the focus selector based on receiving the fifth indication of the translational movement of the hand may only become available to the user after the user has satisfied a predefined usage criterion.

The instructions, when executed by the electronic device, may further cause performance of operations for:
before causing presentation of the other application content associated with the other application:
the causing presentation of the different application content associated with the application comprises causing a scrolling operation within the application to reveal the different application content within the application.

Causing presentation may comprise causing presentation of respective application content at a display of a wrist-wearable device.

Causing presentation may comprise causing presentation of respective application content via an artificial-reality headset.

The first indication and the second indication may be further based on the thumb of the user remaining in contact with the portion of the hand of the user while the user is moving the thumb in the first and second directions.

The first indication and the second indication may be not provided in accordance with respective thumb movements that comprise contact with a touch-sensitive display of an electronic device.

In accordance with a second aspect, there is provided a method of using thumb-based gestures to navigate within and between applications, the method comprising:
causing presentation of application content associated with an application to a user of a wrist-wearable device, the wrist-wearable device comprising a biopotential-signal-sensing component;
in response to receiving a first indication, based on data from the biopotential-signal-sensing component, that a thumb of the user is moving in a first direction on a portion of a hand of the user, causing presentation of different application content associated with the application; and
in response to receiving a second indication, based on data from the biopotential-signal-sensing component, that the thumb of the user is moving in a second direction, distinct from the first direction, on the portion of the hand of the user, causing presentation of other application content associated with another application, the other application distinct from the application.

The method can be performed while a user is wearing a wrist-wearable device and/or an artificial-reality headset comprises one or more cameras, one or more displays (e.g., placed behind one or more lenses), and one or more programs, where the one or more programs are stored in memory and configured to be executed by one or more processors. The one or more programs comprising instructions for performing operations.

The first direction may be substantially perpendicular to the second direction.

The first direction may be a horizontal direction starting along a major dimension of an index finger of the user; and
the second direction may be a vertical direction starting along a minor dimension of the index finger of the user.

In accordance with a third aspect, there is provided a wrist-wearable device, comprising:
one or more processors; and
memory comprising instructions that, when executed by the one or more processors, cause the wrist-wearable device to
   cause presentation of application content associated with an application to a user of a wrist-wearable device, the wrist-wearable device comprising a biopotential-signal-sensing component;
   in response to receiving a first indication, based on data from the biopotential-signal-sensing component, that a thumb of the user is moving in a first direction on a portion of a hand of the user, cause presentation of different application content associated with the application; and
   in response to receiving a second indication, based on data from the biopotential-signal-sensing component, that the thumb of the user is moving in a second direction, distinct from the first direction, on the portion of the hand of the user, cause presentation of other application content associated with another application, the other application distinct from the application.

The first direction may be substantially perpendicular to the second direction.

In accordance with a fourth aspect, there is provided a method of returning to a home-screen user interface based on a predefined universal home gesture of a gesture space comprised of hand gestures is method. The method comprises, while application content that does not comprise a home-screen user interface is being presented to a user, in response to receiving an indication, based on data from a biopotential-signal-sensing component of a wrist-wearable device, a pinch contact between (i) a portion of a middle finger and (ii) a thumb of the user, causing the home-screen user interface to be presented to the user.

Having summarized the fourth aspect generally related to returning to a home-screen user interface based on a predefined universal home gesture of a gesture space comprised of hand gestures, a fifth aspect of providing an efficient and intuitive gesture space is now summarized.

In accordance with a fifth aspect, there is provided a method of providing an efficient and intuitive gesture space is provided. One or more operations of the method are performed while a user interface is being presented to a user after a different user interface was previously presented to the user. The method comprises, in accordance with receiving an indication of movement, based on data from a biopotential-signal-sensing component, of a first finger of the user, causing an adjustment to presentation of media content that is being presented to the user. The method comprises, in accordance with receiving an indication of movement, based on data from the biopotential-signal-sensing component, of a second finger, distinct from the first finger, of the user, causing presentation of the different user interface to the user, comprising causing presentation of a selectable user interface element to which a focus selector is directed within the different user interface. And the method comprises, in accordance with receiving an indication of a pressing movement, based on data from the biopotential-signal-sensing component, of a thumb of the user on a hand surface of the user, causing a selection of the selectable user interface element.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A-1I illustrate an example sequence of using thumb-based gestures to navigate within and between applications, in accordance with some embodiments.
Figures 2A-2I illustrate an example sequence of providing an efficient and intuitive gesture space for facilitating interactions with a wrist-wearable device, in accordance with some embodiments.
Figure 3 illustrates an example logical flow diagram illustrating a method for interacting with a user interface of an electronic device using hand gestures, in accordance with some embodiments.
Figure 4 shows an example method flow chart of using thumb-based gestures to navigate within and between applications, in accordance with some embodiments.
Figure 5 shows an example method flow chart of providing an efficient and intuitive gesture space for facilitating interactions with a wrist-wearable device, in accordance with some embodiments.
Figure 6 shows an example method flow chart of returning to a home-screen user interface based on a predefined universal home gesture of a gesture space comprised of hand gestures, in accordance with some embodiments.
Figures 7A and 7B illustrate example artificial-reality systems, in accordance with some embodiments.
Figures 8A and 8B illustrate an example wrist-wearable device 800, in accordance with some embodiments.
Figures 9A-9C illustrate example head-wearable devices, in accordance with some embodiments.
Figures 10A and 10B illustrate an example handheld intermediary processing device, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

Embodiments of this disclosure can include or be implemented in conjunction with various types or embodiments of artificial-reality systems. Artificial-reality (AR), as described herein, is any superimposed functionality and or sensory-detectable presentation provided by an artificial-reality system within a user's physical surroundings. Such artificial-realities can include and/or represent virtual reality (VR), augmented reality, mixed artificial-reality (MAR), or some combination and/or variation one of these. For example, a user can perform a swiping in-air hand gesture to cause a song to be skipped by a song-providing API providing playback at, for example, a home speaker. An AR environment, as described herein, includes, but is not limited to, VR environments (including non-immersive, semi-immersive, and fully immersive VR environments); augmented-reality environments (including marker-based augmented-reality environments, markerless augmented-reality environments, location-based augmented-reality environments, and projection-based augmented-reality environments); hybrid reality; and other types of mixed-reality environments. In some embodiments of an AR system, ambient light (e.g., a live feed of the surrounding environment that a user would normally see) can be passed through a display element of a respective head-wearable device presenting aspects of the AR system. In some embodiments, ambient light can be passed through respective aspect of the AR system. For example, a visual user interface element (e.g., a notification user interface element) can be presented at the head-wearable device, and an amount of ambient light (e.g., 15-50% of the ambient light) can be passed through the user interface element, such that the user can distinguish at least a portion of the physical environment over which the user interface element is being displayed.

Artificial-reality content can include completely generated content or generated content combined with captured (e.g., real-world) content. The artificial-reality content can include video, audio, haptic events, or some combination thereof, any of which can be presented in a single channel or in multiple channels (such as stereo video that produces a three-dimensional effect to a viewer). Additionally, in some embodiments, artificial reality can also be associated with applications, products, accessories, services, or some combination thereof, which are used, for example, to create content in an artificial reality and/or are otherwise used in (e.g., to perform activities in) an artificial reality.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMU)s of a wrist-wearable device) and/or detected via image data captured by an imaging device of a wearable device (e.g., a camera of a head-wearable device)) or a combination of the user's hands. In-air means, in some embodiments, that the user hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single or double finger tap on a table, on a user's hand or another finger, on the user's leg, a couch, a steering wheel, etc.). The different hand gestures disclosed herein can be detected using image data and/or sensor data (e.g., neuromuscular signals sensed by one or more biopotential sensors (e.g., EMG sensors) or other types of data from other sensors, such as proximity sensors, time-of-flight (ToF) sensors, sensors of an inertial measurement unit, etc.) detected by a wearable device worn by the user and/or other electronic devices in the user's possession (e.g., smartphones, laptops, imaging devices, intermediary devices, and/or other devices described herein).

As described herein, a gesture space is a set of commands that are configured to be performed based on a characteristic of a user input (e.g., a portion of the user input that corresponds to the command performed in response to the input). For example, a particular gesture space may include thumb movements (e.g., a movement of the user's thumb across a portion of their palm and/or index finger). As described herein, a thumb movement may include a movement of a user's thumb laterally along a side of the user's hand or index finger, and/or a movement of the user's thumb that results in a contact between the thumb and another finger of the user.

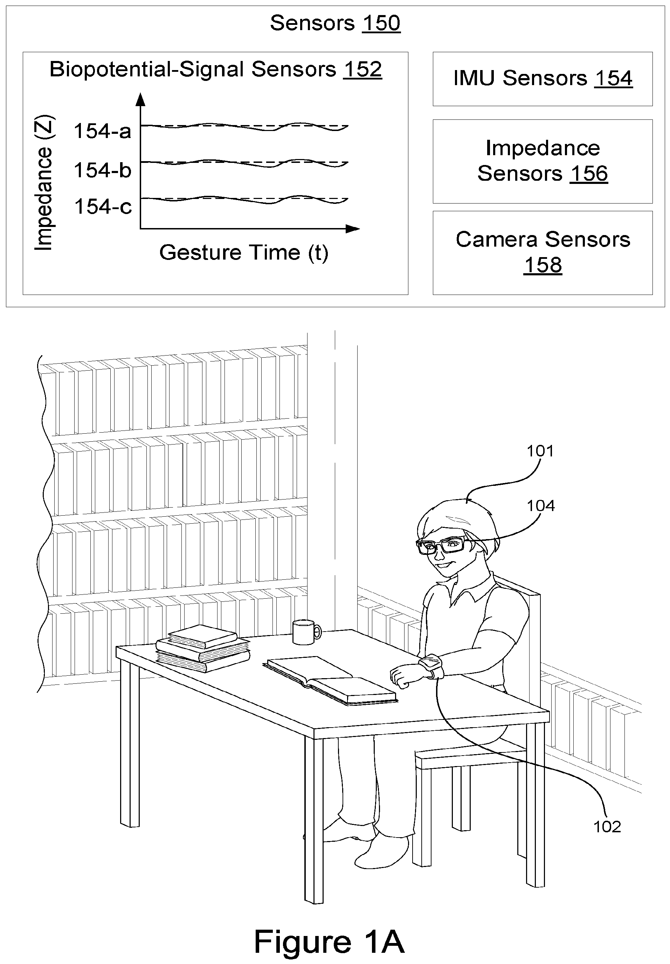

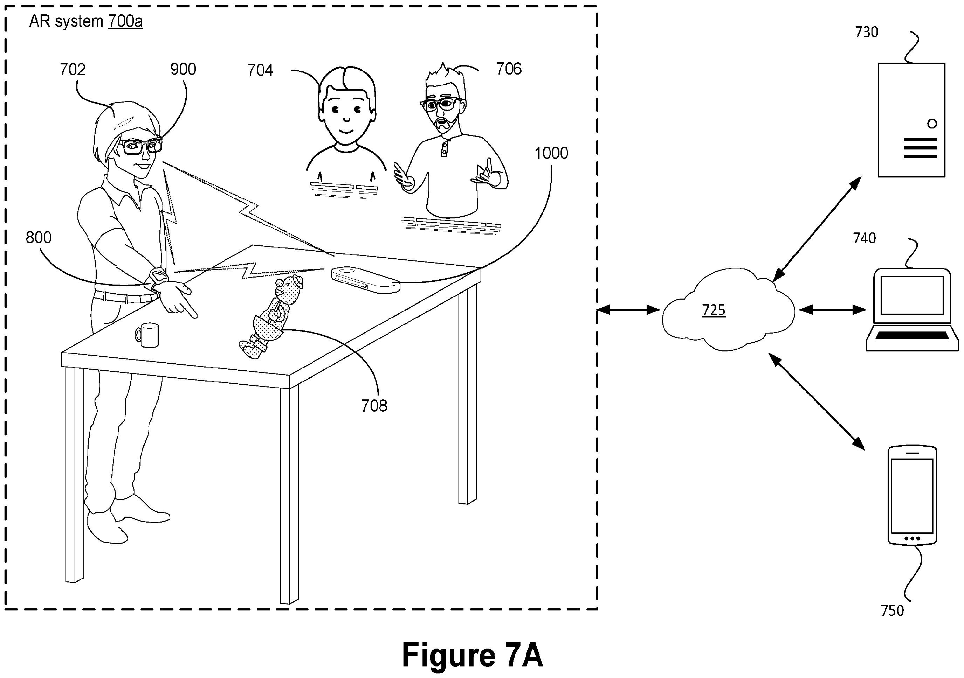

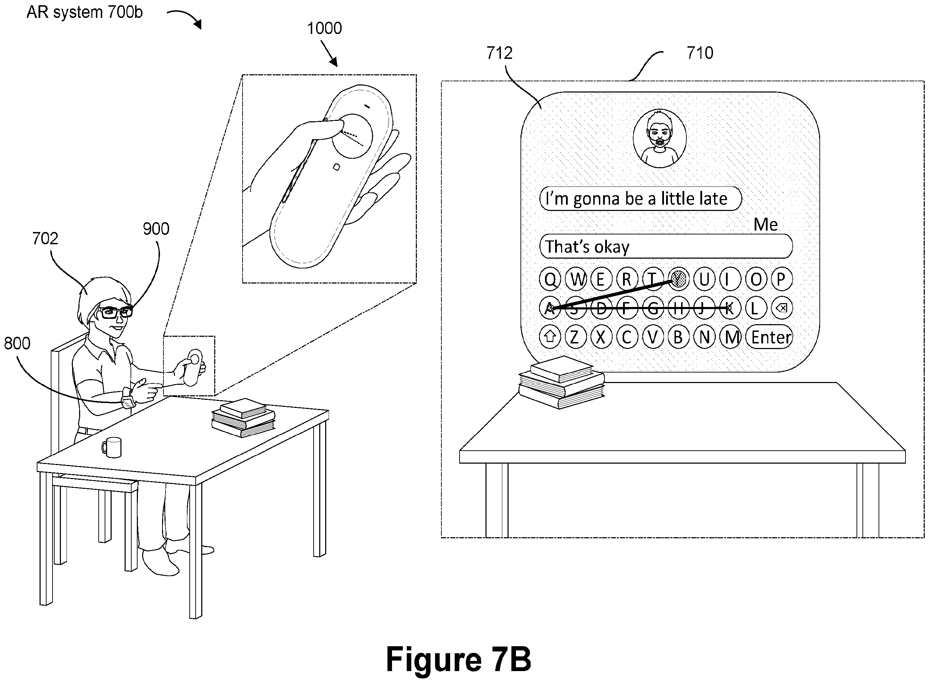

Figures 1A-1I illustrate an example sequence of using thumb-based gestures to navigate within and between applications, in accordance with some embodiments. The example sequence shown in Figures 1A-1I may be performed by a computer system that includes at least one wearable device, such as the wrist-wearable device 800, the head-wearable device, the intermediary device, and/or any other device described below in reference to Figures 7A and 7B. In some embodiments, the computing system may include an intermediary device configured to process signals, data, and/or other information in conjunction with operations performed by a wrist-wearable device, head-wearable device, and/or other device within the computing system.

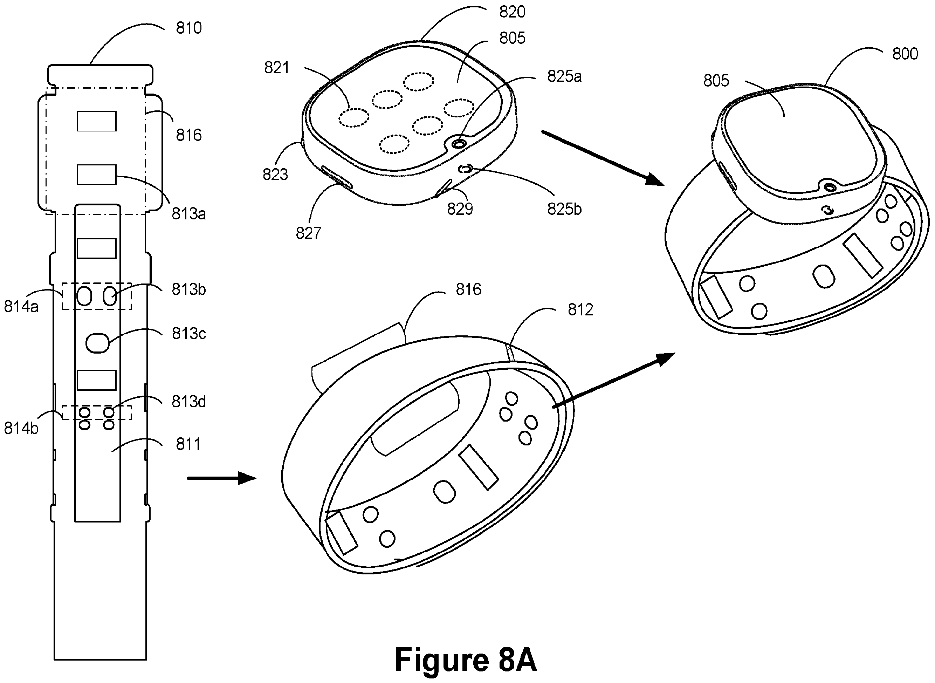

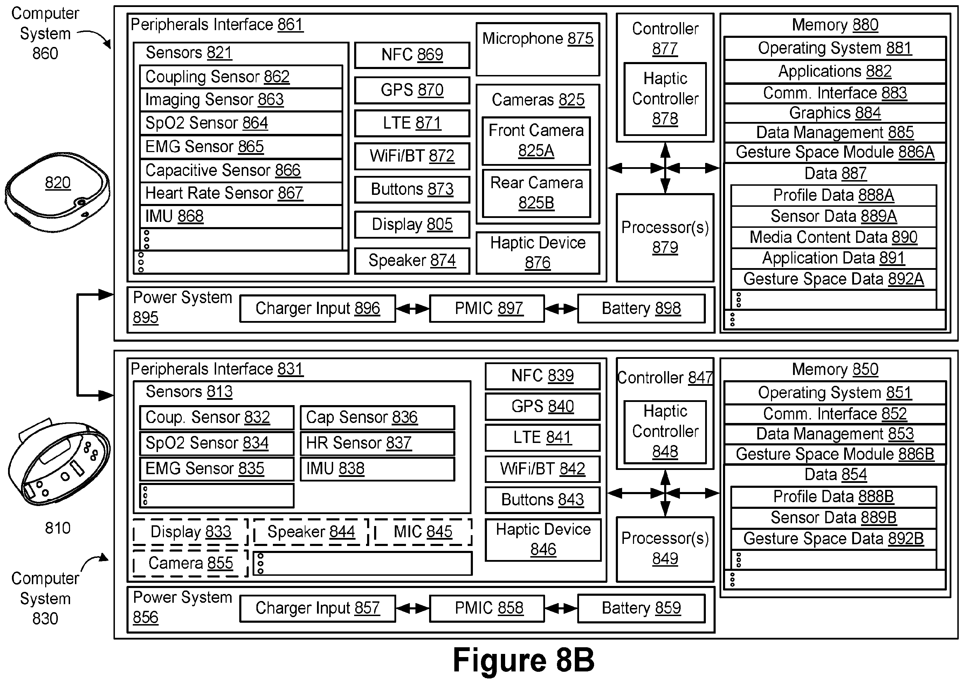

In Figure 1A, the user 101 is wearing a wrist-wearable device 102 and a head-wearable device 104. The wrist-wearable device and/or the head-wearable device may include one or more sensors 150. The sensors 150 may include one or more biopotential-signal-sensing components, such as the biopotential-signal sensors 152. The sensors 150 may include one or more IMU sensors 156, one or more impedance sensors 158, one or more camera sensors 160, and/or any of the other sensors described with respect to the computing system 860 and/or 830 described with respect to Figure 8B, which can be part of the wrist-wearable device 800 described with respect to Figures 8A and 8B. The wrist-wearable device 102 and/or the head-wearable device 104 may include memory 880 that includes gesture space data 892 and applications, such as the gesture space module 886.

The wrist-wearable device 102 includes a plurality of biopotential-signal sensors 152 (e.g., neuromuscular-signal sensors, such as electromyography sensors), which are configured to detect neuromuscular signals at a plurality of sensor-skin interfaces along a wrist of the user 101, such as sensor-skin interfaces 154-a, 154-b, and 154-c, prophetic data corresponding thereto is illustrated in some of the Figures 1A-1I.

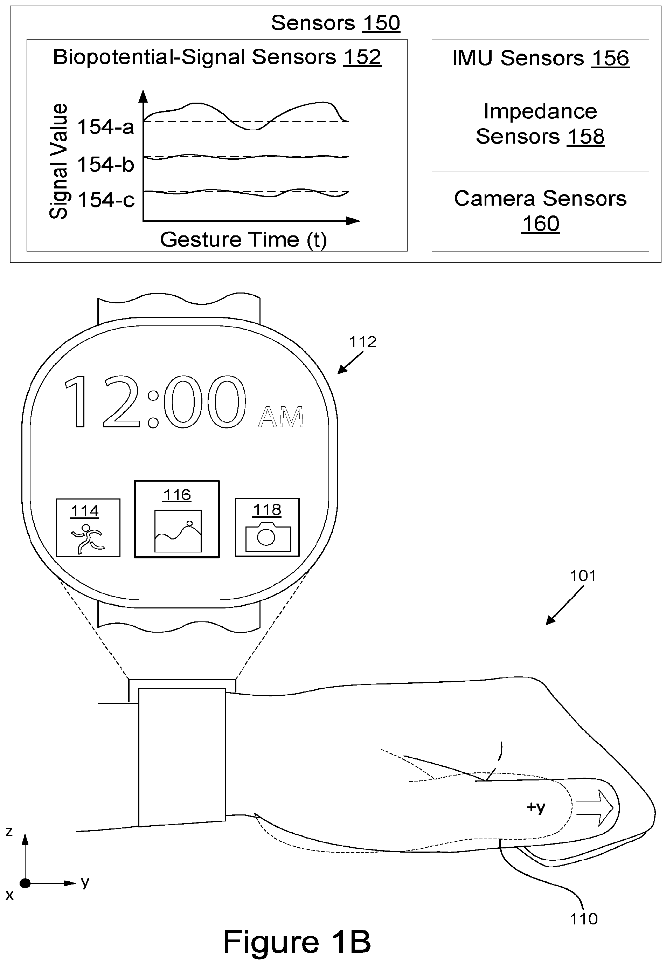

Figure 1B shows the user 101 performing a hand gesture (e.g., an in-air hand gesture) that includes a thumb movement 110 in a first direction. The thumb movement 110 is in a horizontal direction (e.g., a "+y" direction with respect to the axes provided in Figure 1B) with respect to a predefined coordinate axes system that may be based on a current orientation of the user's hand, and/or a reference plane (e.g., a physical surface in proximity to the user's hand). The thumb movement 110 is performed along a major dimension of the user's index finger (e.g., a lengthwise dimension of the index finger). The user 101 maintained contact between the thumb and the index finger while the thumb movement 110 was performed.

While the user 101 is performing the thumb movement 110, a watch-face user interface 112 is presented at the display of the wrist-wearable device 102. The watch-face user interface includes a plurality of user-interface elements (e.g., user-interface elements 114, 116, and 118) which correspond to applications that the user 101 can access via the wrist-wearable device 102 and/or the head-wearable device 104 (e.g., some aspects of the respective applications may be provided by the wrist-wearable device 102, and other aspects of the applications may be provided by the head-wearable device). For example, a visual interface of a particular application may be presented at the head-wearable device, while one or more user inputs for interacting with the visual interface may be detected by the wrist-wearable device 102.

And while the user 101 is performing the thumb movement 110, one or more biopotential-signal sensors of the wrist-wearable device 102 are detecting signal values (e.g., electromyography signal values) at the sensor-skin user interfaces 154-a, 154-b, and 154-c, some or all of which may correspond to the movement of the thumb along the user's index finger. For example, the sensor-skin interface 154-a may be located at a position along the user's wrist such that the sensor-skin interface 154-a detects a larger signal (e.g., a signal with a greater amplitude) corresponding to the thumb movement 110. In some embodiments, power is reduced and/or increased at one or more biopotential-signal sensors 152 of the wrist-wearable device 102 based on a first portion of biopotential-signals that are detected by the biopotential-signal sensors 152.

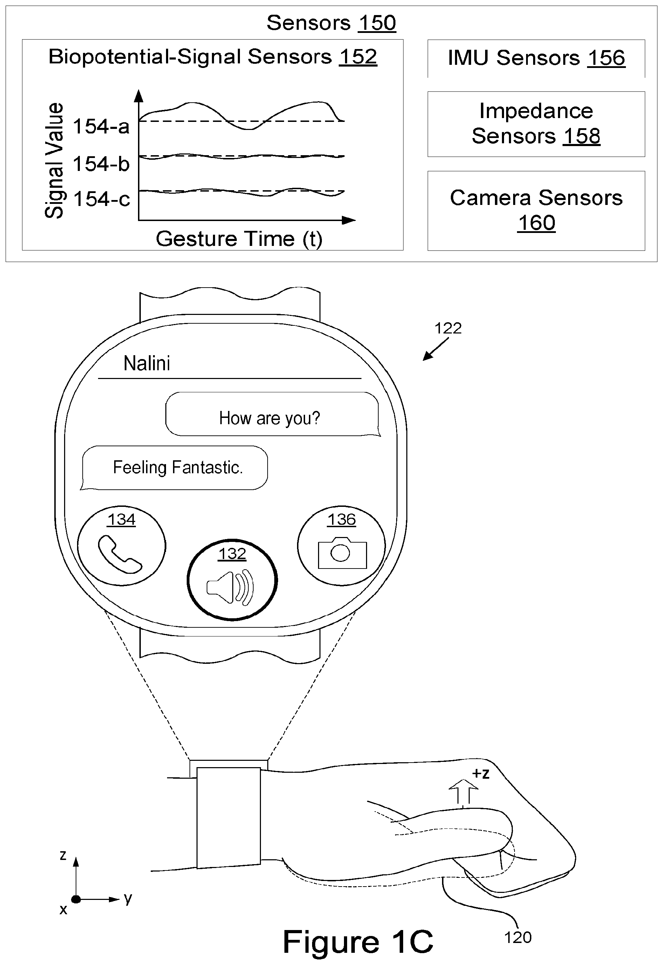

Figure 1C shows another user interface of a different application (e.g., a messaging application) being displayed at the wrist-wearable device 102. The other user interface is caused to be presented at the wrist-wearable device 102 based on the thumb movement 110 shown in Figure 1B. That is, the message-thread user interface 122 corresponds to a distinct application stored in memory of the wrist-wearable device 102 (e.g., a messaging application) that is distinct from an application stored in memory corresponding to the watch-face user interface 112 shown in Figure 1B (which may be an operation-system-level application). In other words, in response to receiving an indication, based on data from a biopotential-signal-sensing component of the wrist-wearable device 102 (e.g., one or more of the biopotential-signal sensors 152 corresponding to the sensor-skin interface 154-a), the display of the wrist-wearable device 102 is caused to present other application content that is associated with another application, distinct from the application associated with the watch-face user interface (e.g., a system-level application associated with the operation system of the wrist-wearable device). The user 101 is performing another gesture that includes a thumb movement 120. The thumb movement 120 is substantially perpendicular to the thumb movement of the gesture shown in Figure 1B. The thumb movement 120 is in a vertical direction with respect to the coordinate plane shown in Figures 1A-1I (e.g., a "+z" direction), as opposed to the horizontal direction of the thumb movement 110 shown in Figure 1B. In some embodiments, the thumb movement maintains contact with the side of the user's hand during the performance of the gesture.

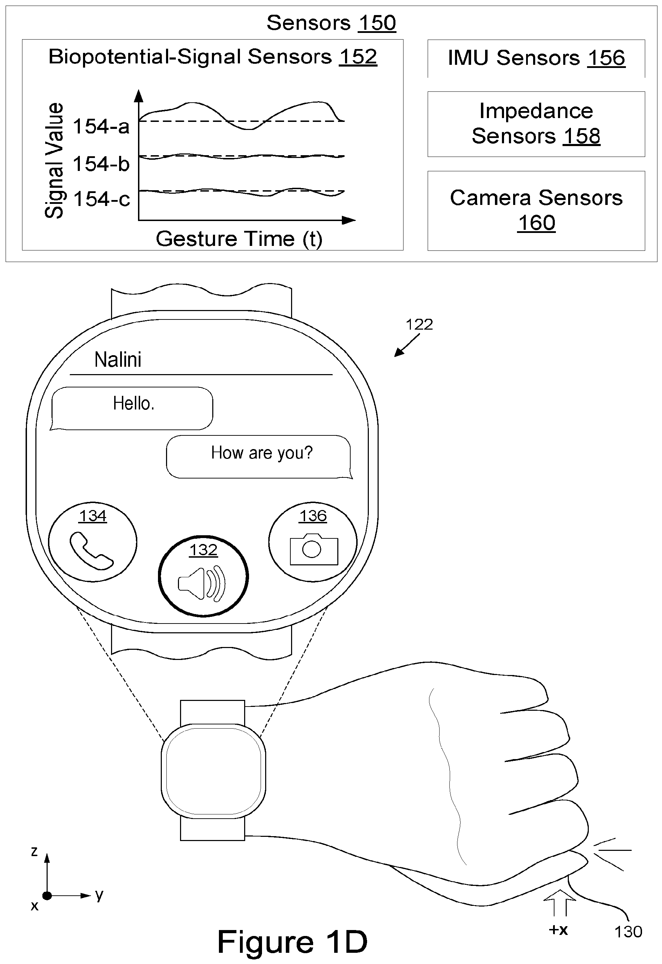

Figure 1D shows the different application content associated with the messaging application shown in Figure 1C (e.g., the message-thread within the messaging application has been caused to scroll upward within the user interface to display new messaging content), based on the user 101 performing the gesture that includes the thumb movement in Figure 1C. The user 101 is performing another gesture in Figure 1D that includes a contact (e.g., a pressing gesture) of the thumb of the user 101 against a side of the user's hand. The pressing gesture may be detected by the same biopotential-signal-sensing component that is used to detect the gestures shown in Figures 1B-1C, and/or different sensors (e.g., a different neuromuscular-signal-sensor located at different sensor-skin interface, and/or a different type of sensor altogether). For example, the pressing contact of the third gesture may be detected by an impedance sensor and/or a pressure-sensitive sensor of the wrist-wearable device 102.

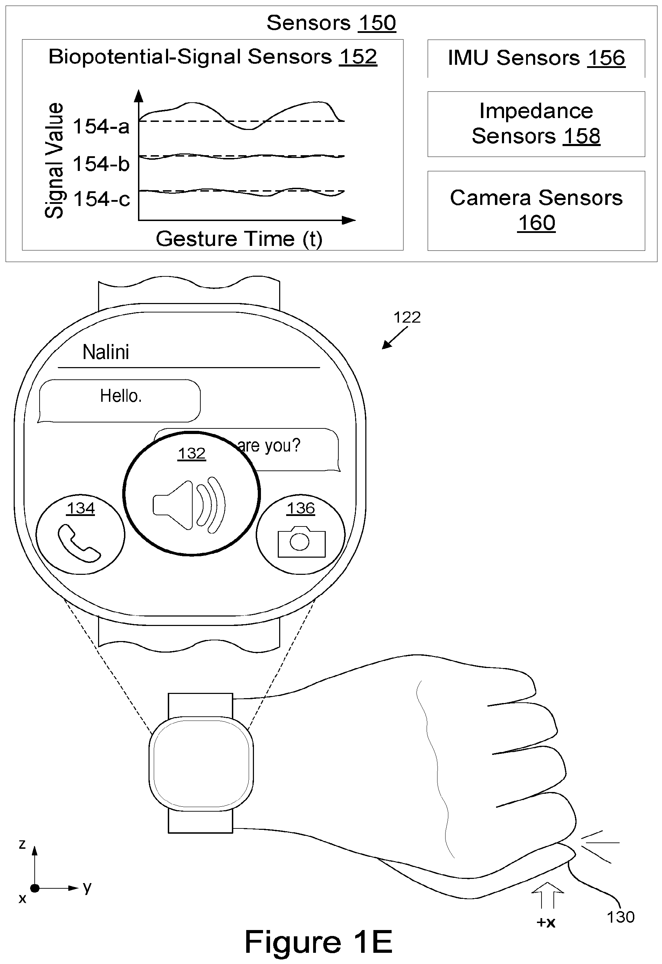

Figure 1E shows a selectable user interface element 140 from the message-thread user interface that is caused to expand within the message-thread user interface based on the user 101 performing the press gesture shown in Figure 1D. In Figure 1E, the user is continuing the gesture that includes the pressing contact by the thumb of the user 101 against the side of the hand of the user.

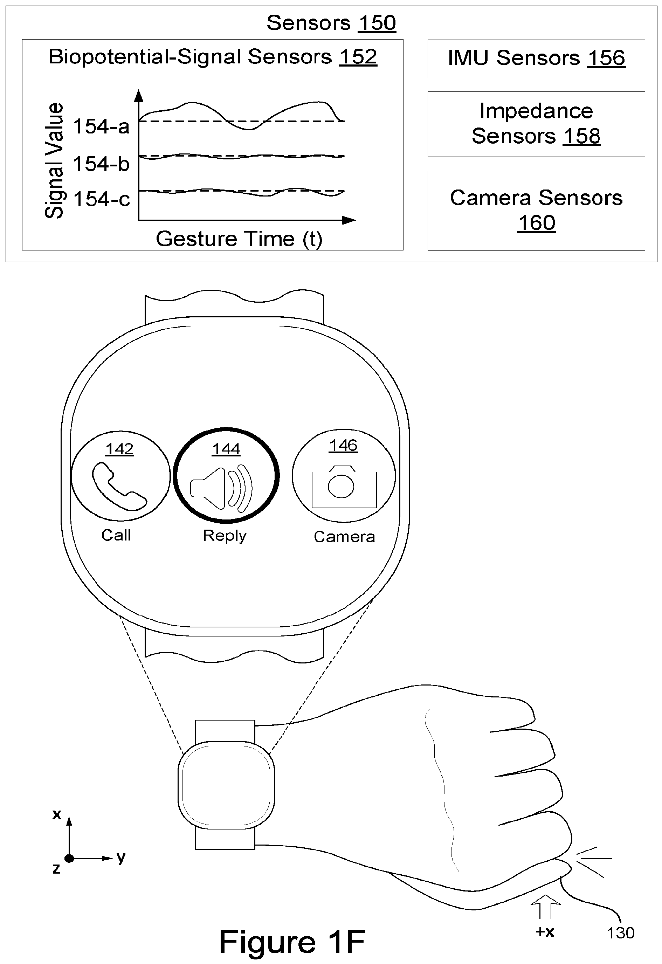

Figure 1F shows other selectable user interface elements expanding within the message-thread user interface based on the user 101 continuing to perform the press gesture that started in Figure 1D. In other words, by continuing to perform the gesture, the selectable user interface elements within the message-thread user interface are expanded and displayed as overlaying the original content that was in the message-thread user interface. The user is continuing to perform the press gesture and is also performing a thumb movement along the major direction of the index finger of the user 101.

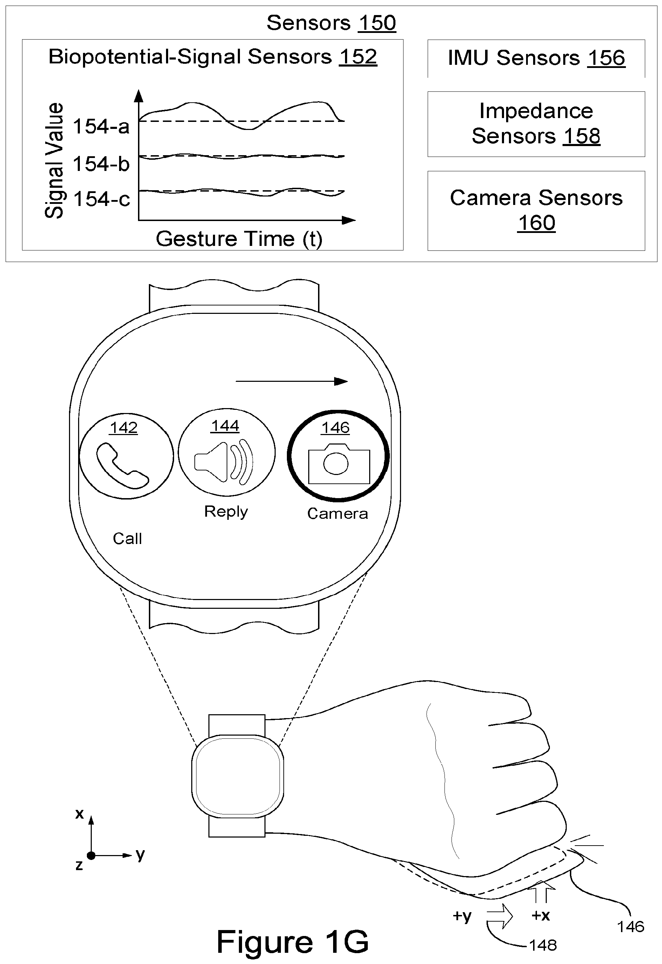

Figure 1G shows another user interface that includes corresponding user interface elements 142, 144, and 146 to the user interface elements 132, 134, and 136 that were in the messaging thread user interface. The focus selector in the user interface moves from the user interface element 144 to the user interface element 146 based on the user 101 performing the gesture that includes the contact 130 and the thumb movement 148 shown in Figure 1F. That is, based on the user 101 performing the thumb movement 148 while performing the contact 130 that includes the thumb press against the finger, the user 101 is causing another selectable user interface element being displayed at the display of the wrist-wearable device 102 to be selected such that it is the in-focus user interface element.

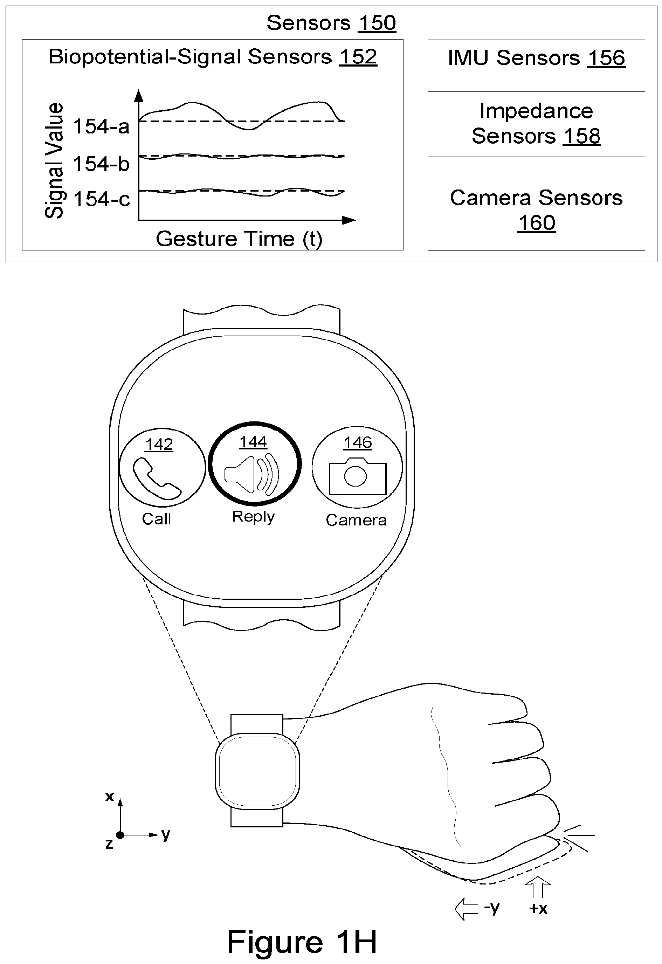

Figure 1H shows the focus selector moving back to the user interface element 144 based on the user performing another gesture that includes the contact 130, as well as a thumb movement 149 in a direction opposite to the thumb movement 148 (e.g., a "-y" direction according to the coordinate plane shown in the bottom left corner of Figure 1H).

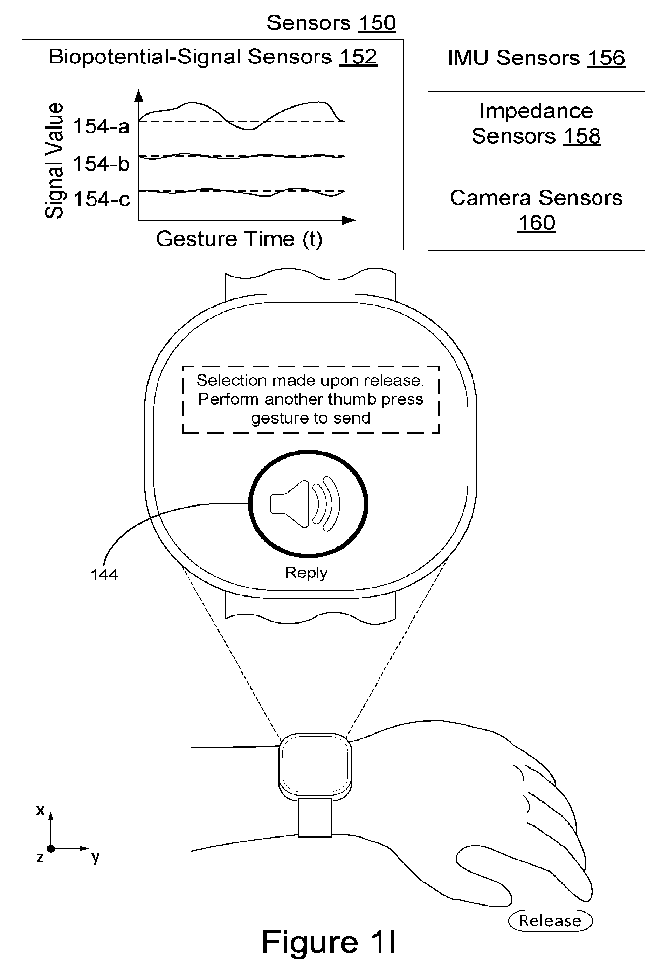

Figure 1I shows the user 101 releasing the thumb press gesture that started in Figure 1D. Based on the user 101 releasing the thumb press gesture, the selectable user interface element 144 that is in-focus when the release was performed is caused to be selected, which causes a corresponding application operation corresponding to the messaging application to be performed.

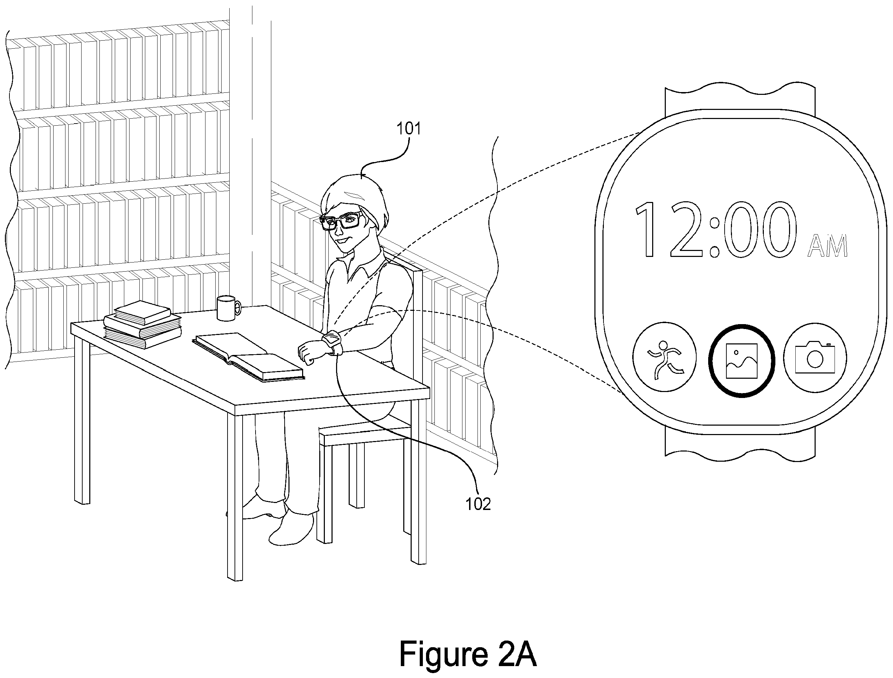

Figures 2A-2I illustrate an example sequence of providing an efficient and intuitive gesture space for facilitating interactions with a wrist-wearable device, in accordance with some embodiments. The example sequence is performed by the same user 101 described with respect to the gestures performed in Figures 1A-1H.

Figure 2A shows the user 101 sitting at a desk, wearing a wrist-wearable device 102 and a head-wearable device 104. The gestures discussed with respect to Figures 2A-2I are detected by the sensors 150, including the biopotential-signal sensors 152. That is, the same physical componentry and/or non-transitory computer-readable storage media can be used to cause performance of the gestures described with respect to any of the Figures 1A-2I, even though some of the operations caused by the gestures performed in Figures 2A-2I cause operations to be performed within an artificial-reality environment presented by the head-wearable device 104.

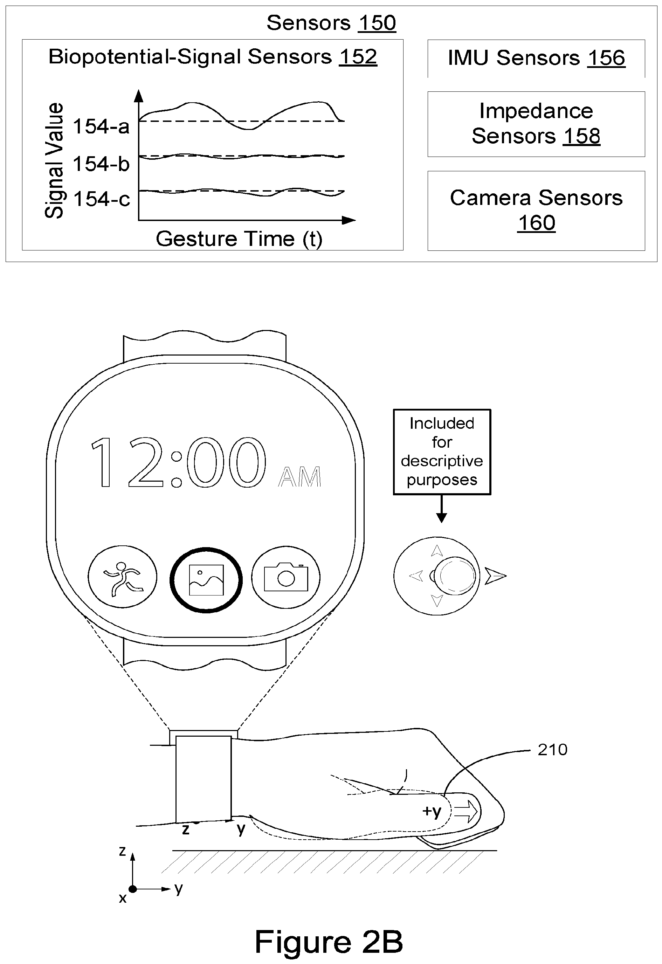

Figure 2B shows the same user interface displayed at the wrist-wearable device 102 as shown in Figure 2A. The user 101 is performing a thumb movement 210 in a first direction with respect to a fixed coordinate plane corresponding to a particular location on the hand of the user 101. The thumb movement 210 is detected by one or more biopotential-signal sensors 152 on the wrist-wearable device 102.

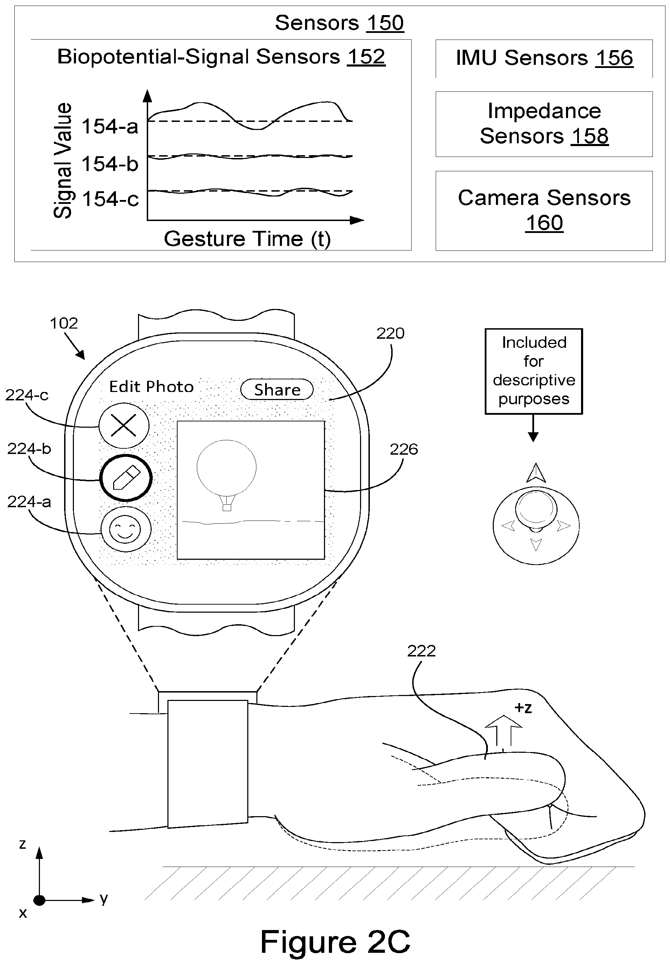

Figure 2C shows the wrist-wearable device 102 displaying another user interface, distinct from the user interface displayed in Figures 2A-2B, based on the user 101 performing the thumb movement 210 in Figure 2B. The display of the wrist-wearable device 102 is displaying a user interface 220 that includes application content 226 (e.g., an image), and a plurality of selectable user-interface elements for interacting with the application content 226 presented within the user interface 220). Specifically, the user interface displayed by the wrist-wearable device 102 in Figure 2C includes a set of user-interface elements 224-a, 224-b, and 224-c, which cause different interactions with application content 226 (e.g., a shared image) that is presented within the user interface. The user-interface element 224-b is caused to be presented in-focus by default (which is visually represented by thicker border surrounding the user-interface element 224-b). The user 101 is performing a gesture that includes a thumb movement 222 in a second direction (relative to the thumb movement 210 in the first direction shown in Figure 2B). In some embodiments, distinct haptic feedback is provided based on whether the user 101 performs a thumb movement in the first direction or the second direction.

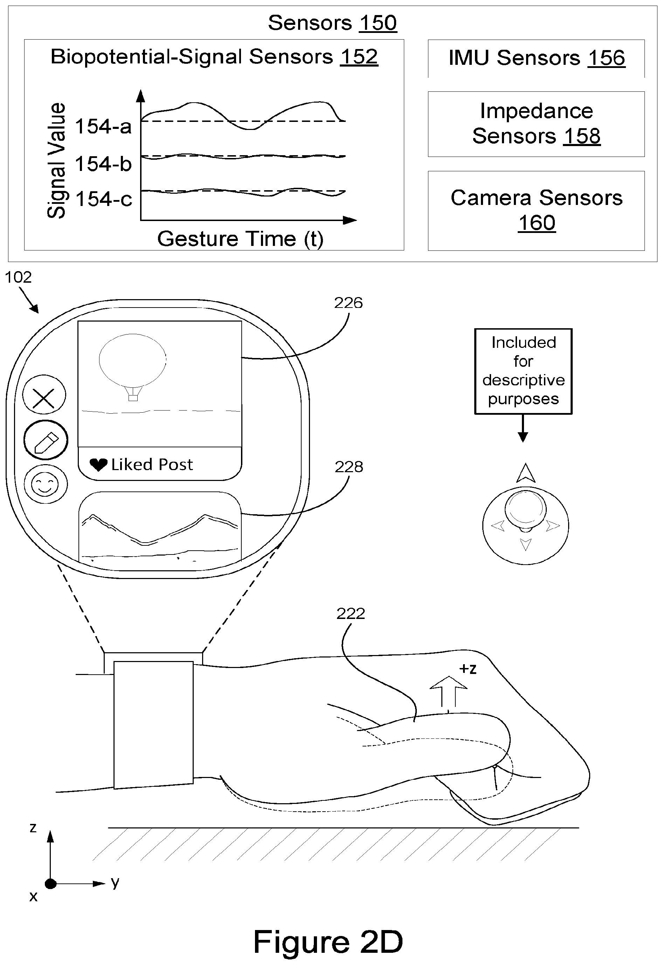

Figure 2D shows the application content 226 scrolling within the user interface (e.g., an intra-application operation) based on the user performing the thumb movement 222 shown in Figure 2C. In addition to the application content scrolling vertically within the user interface 220, additional application content 228 associated with the same application as the application content 226 is presented within the user interface 220. The user 101 is continuing to perform the thumb movement 222. While neither of the application content 226 or the application content 228 are in focus within the user interface 220, none of the user-interface elements 224-a, 224-b, or 224-c are caused to be in focus within the user interface. In other words, in some embodiments, whether or not a user-interface element is presented in-focus as a primary action within a user interface may depend on whether any particular application content is present within the user interface. That is, primary, secondary, and/or tertiary actions corresponding to a particular gesture space may be configured to affect particular application content, such that one application content must be in a particular mode (e.g., an in-focus mode) in order for operations related to the primary, secondary, and/or tertiary actions to be performed.

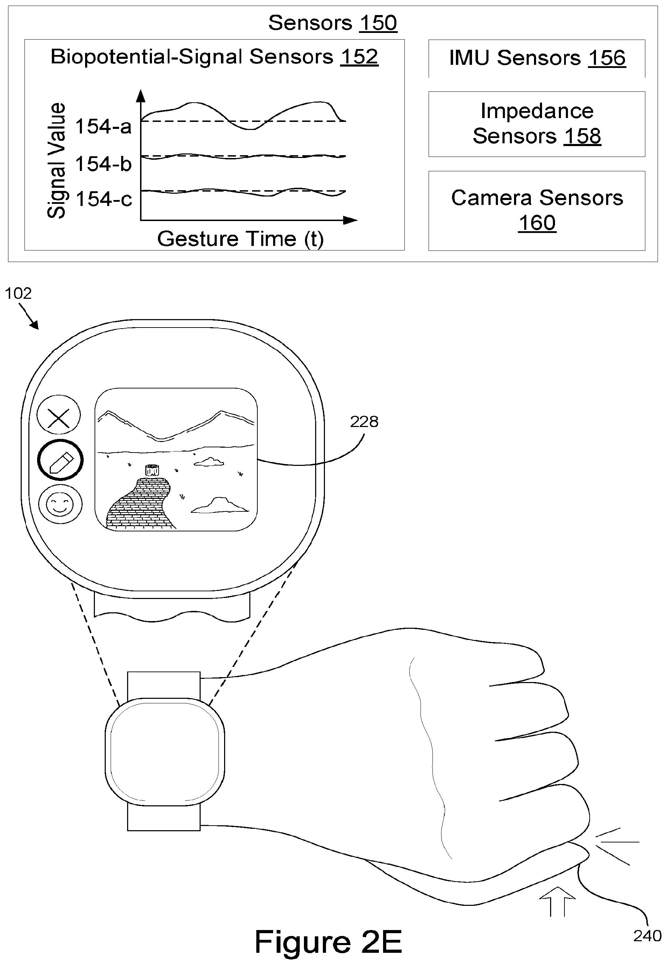

Figure 2E shows, in accordance with the user 101 continuing to perform the thumb movement 222, the application content 228 continuing to scroll vertically within the user interface, as the other application content 226 is now no longer displayed within the user interface 220 display at the wrist-wearable device 102. In accordance with the application content 228 being in focus again, the user-interface element 224-b is once again presented in-focus, indicating that the user can perform a primary action to interact with the application content 228. The user is performing a thumb press gesture 250.

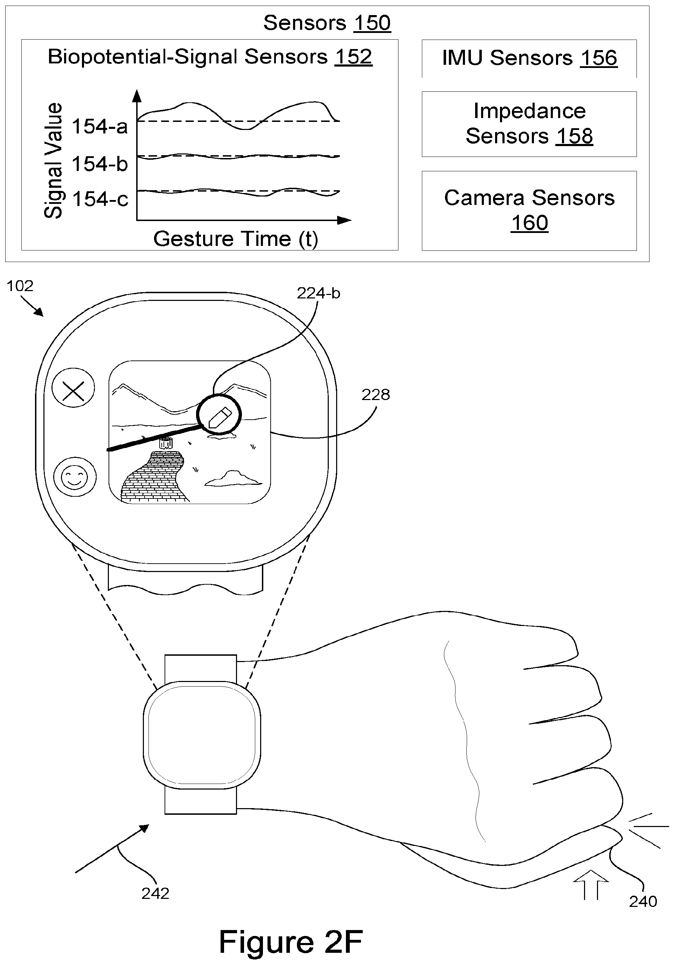

Figure 2F shows the user 101 continuing to perform the thumb press gesture 250 while performing an arm movement 242 (e.g., in a diagonal direction to the right). Based on the user performing the arm movement 242 while maintaining the thumb press gesture 240, the user-interface element 224-b is caused to move within the user interface 220, and while doing so, causes an action to be performed to modify the application content 228.

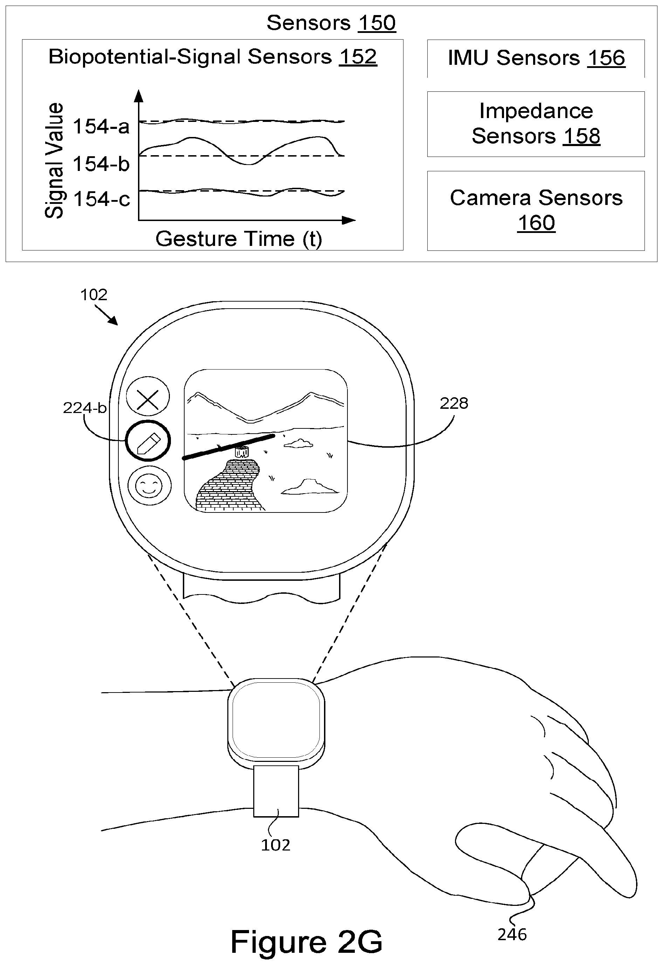

Figure 2G shows the display of the wrist-wearable device 102 displaying the application content 228 after it has been modified by the user performing the combine gesture that included maintaining the thumb press gesture 240 while performing the arm movement 242, as shown in Figure 2F. In accordance with the user subsequently releasing the thumb press gesture 240, the user-interface element 224-b is now located back in its original location. The user is performing a middle-finger-pinch gesture that includes a contact 246 between the thumb and a second finger (e.g., the middle finger) of the user 101. In some embodiments, the wrist-wearable device 102 is configured to provide a plurality of sensor-skin interfaces for detecting biopotential signals (e.g., neuromuscular signals) via the biopotential-signal sensors 152, and distinct sensor-skin interfaces are configured to detect the thumb-movement-based gestures shown in Figures 2B-2F, and the middle-finger-pinch gesture that includes the contact 246 shown in Figure 2G. For example, the sensor-skin interface 154-b has a greater signal value based on the user 101 performing the middle-finger-pinch gesture that includes the contact 246, and the sensor-skin interface 154-a has greater signal values when the user performs the other thumb movements that do not include a pinch contact with a finger of the user.

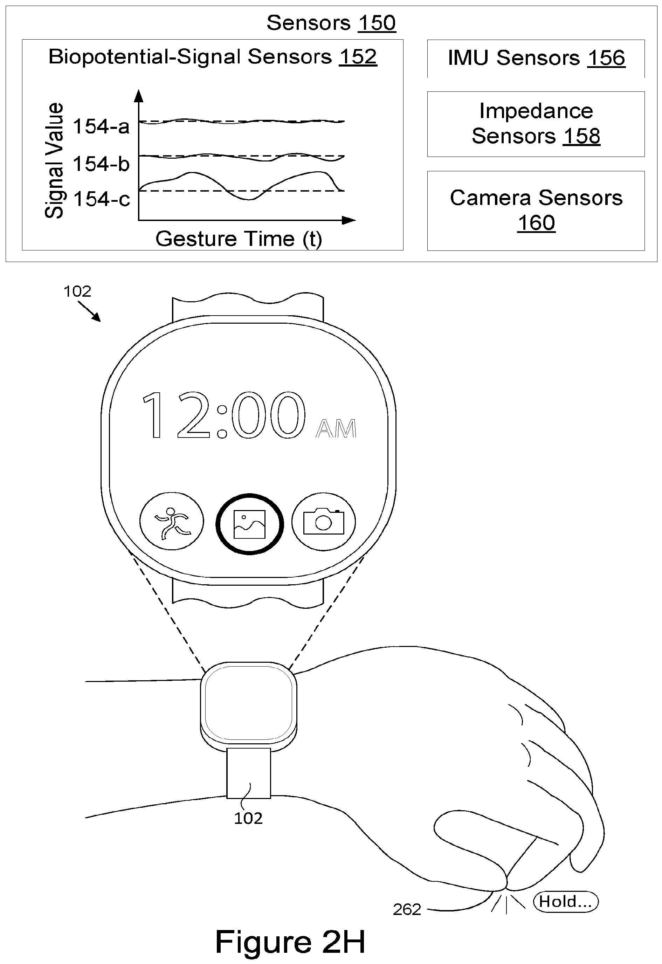

Figure 2H shows display of the wrist-wearable device 102 displaying a home-screen user interface based on the user 101 performing the middle-finger-pinch gesture that includes the contact 246 in Figure 2G. The user 101 is performing a pinch gesture 262 that includes a pinch contact between the thumb and a first finger (e.g., an index finger) of the user 101. As discussed above, different sensor-skin interfaces that are detectable by the biopotential-signal sensors 152. For example, the sensor-skin interface 154-c detects a higher signal value for the index-finger-pinch gesture 262 than is detected by the sensor-skin interface 154-a or the sensor-skin interface 154-b.

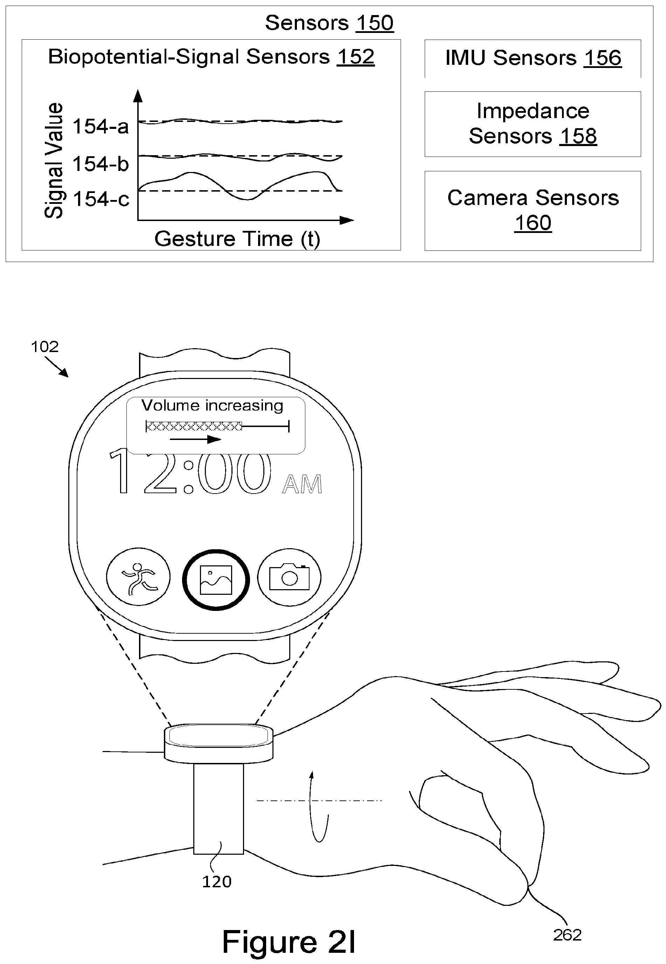

Figure 2I shows the wrist-wearable device 102 displaying a watch-face user interface, which may be a home user interface of the wrist-wearable device. In accordance with the user 101 maintaining the pinch gesture while performing a clockwise wrist rotation, a media settings command is performed that causes a system media setting of the wrist-wearable device 102 to be adjusted. For example, as shown at the display of the wrist-wearable device 102, in accordance with the user 101 performing the middle-finger-pinch gesture 262 while performing the wrist rotation, a system volume of the wrist-wearable device is adjusted. In some embodiments, a system command may be performed without any additional movement of the user's hand while they perform the pinch gesture that includes the contact between the thumb and first finger of the user 101.

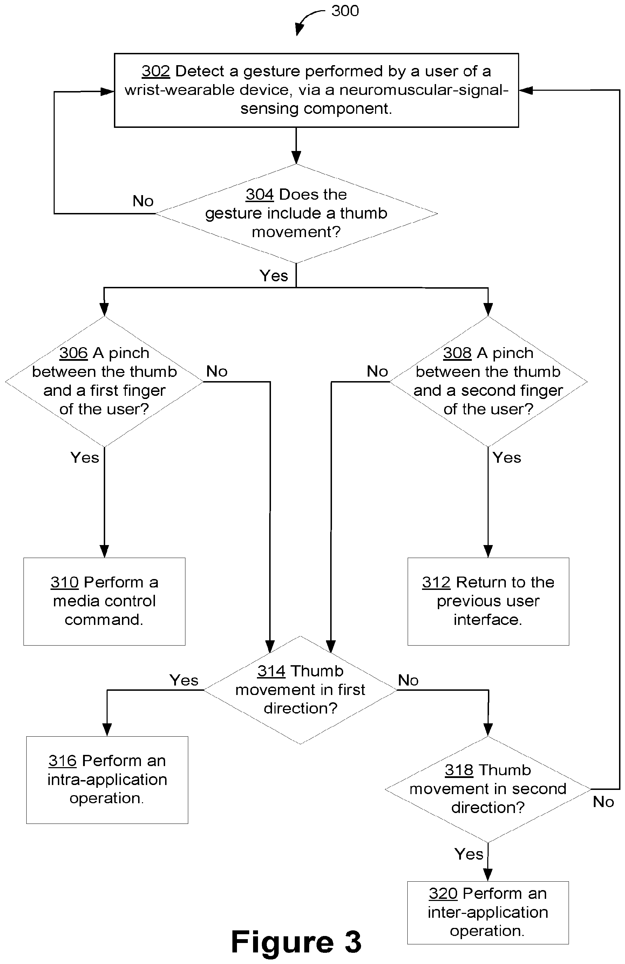

Figure 3 illustrates a method 300, represented as a logical flow diagram, illustrating a method for interacting with a user interface of an electronic device using hand gestures, in accordance with some embodiments.

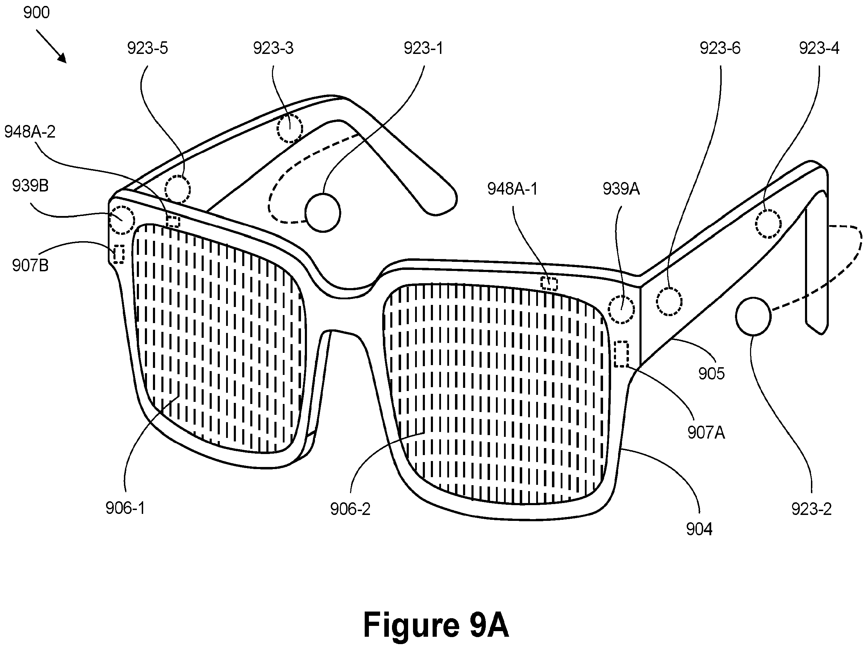

The method 300 may be performed by a computing system, which may be an artificial-reality computing system that includes one or more of the electronic devices described with respect to figures 1A-2I (e.g., the wrist-wearable device 102, which may include some or all of the components of the wrist-wearable device 800 described with respect to Figures 8A and 8B; the head-wearable device 104, which may include some or all of the components of either of the AR device 900 and/or the VR device 910 described with respect to Figures 9A-9C).

As one example, the computing system may include a wrist-wearable device (e.g., a smart watch) that includes one or more biopotential-signal-sensing components (e.g., the biopotential sensors (e.g., EMG sensors 865; Figure 8B)) for detecting biopotential signals corresponding to activity of the user's body (e.g., hand gestures performed by the hand of the user that is wearing the wrist-wearable device). The computing system may include a head-wearable device that is configured to present an artificial-reality environment to a user of the head-wearable device, which may be in conjunction with the user performing hand gestures. In some embodiments, the head-wearable device can optionally be used to detect hand gestures performed by the user, alternatively and/or in addition to sensors of the wrist-wearable device.

The method 300 includes detecting (302) a gesture performed by a user of a wrist-wearable device, via a biopotential-signal-sensing component (e.g., a biopotential-signal-sensing component) and/or a head-wearable device.

In some embodiments, after detecting that the user has performed the gesture detected at 302, the method 300 includes determining whether (304) the gesture includes a thumb movement. In some embodiments, if the gesture does not include a thumb movement, the computing system forgoes doing anything and continues to detect gestures performed by the user (e.g., 304, "No").

In some embodiments, after detecting the gesture and determining that it does include a thumb movement, the method 300 includes determining if the hand gesture also includes: (i) a pinch gesture (306) between the thumb and a first finger of the user, and/or (ii) a pinch gesture (308) between the thumb and a second finger of the user. In accordance with a first determination that the hand gesture does include a pinch between the thumb and first finger of the user, the method 300 includes causing performance of (310) a media control command. And in accordance with a determination that the hand gesture includes a pinch between the thumb and a second finger of the user, the method 300 includes causing performance of (312) a navigational command to cause a previously-presented user interface to be presented within the artificial-reality environment.

In some embodiments, if the hand gesture is determined to include a pinch between the thumb and both the first finger and the second finger of the user, the method includes a heuristic technique for determining which gesture the user most likely intended to perform. For example, if the user recently began listening to a particular track via a music application, the method 300 may include determining that the user likely intended performance of a media control command. In some embodiments, if a particular gesture includes a pinch between the user's thumb and both the first and second fingers, a navigational control command may be established that allows the user to discretely navigate between previously presented user interfaces (e.g., the user may be able to perform a knob-turning gesture while the double-pinch gesture is engaged, such that the user can discretely scroll through previously presented user interfaces by turning their wrist in a clockwise or counter-clockwise direction).

In some embodiments, after detecting the gesture, determining that it includes a thumb movement, and determining that it does not also include a pinch gesture between the thumb and one of the first finger and the second finger of the user, the method 300 includes determining whether (314) the thumb movement is in a first direction. In some embodiments, the first direction must be along a portion of a side of the user's hand. In some embodiments, the thumb must maintain contact with the side of the user's hand during the entire thumb movement. In some embodiments, the first direction is with respect to a particular point on the user's hand (e.g., a fixed coordinate plane), and the first direction does not change with respect to the particular point, regardless of an orientation of the user's hand.

In some embodiments, the method 300 includes, in accordance with (316) determining that the thumb movement is in the first direction, causing performance of an intra-application operation at an electronic device that is in electronic communication with the wearable device that was used to detect the hand gesture.

In some embodiments, based on determining that the thumb movement was not in the first direction, the method includes determining whether (318) the thumb movement is in a second direction. For example, the first and second directions may be substantially perpendicular, in accordance with some embodiments. In some embodiments, the first direction may be horizontally along a major dimension of a phalange of the user, and the second direction may be vertically across a minor dimension of the user's hand.

In some embodiment, the method 300 includes, in accordance with (320) determining that the thumb movement is in a second direction, that is distinct from the first direction, the method causes performance of an inter-application operation at an electronic device that is in electronic communication with the wearable device that was used to detect the hand gesture.

In some embodiments, in accordance with determining that the thumb movement is not in the first direction or the second direction (e.g., 316, "No"), the method 300 causes no actions to be performed at any electronic devices, and the method 300 includes returning to a state of detecting hand gestures being performed by the user of the wrist-wearable device. In some embodiments, in accordance with a determination that the gesture is not in the first direction or the second direction, the method 300 includes inferring whether the thumb movement is closer to being in the first direction or the second direction. Upon determining that a thumb movement has an associated direction that is within a threshold angular range of the first direction and/or the second direction, the method 300 may include causing an associated operation to be performed corresponding to direction within the threshold angular range.

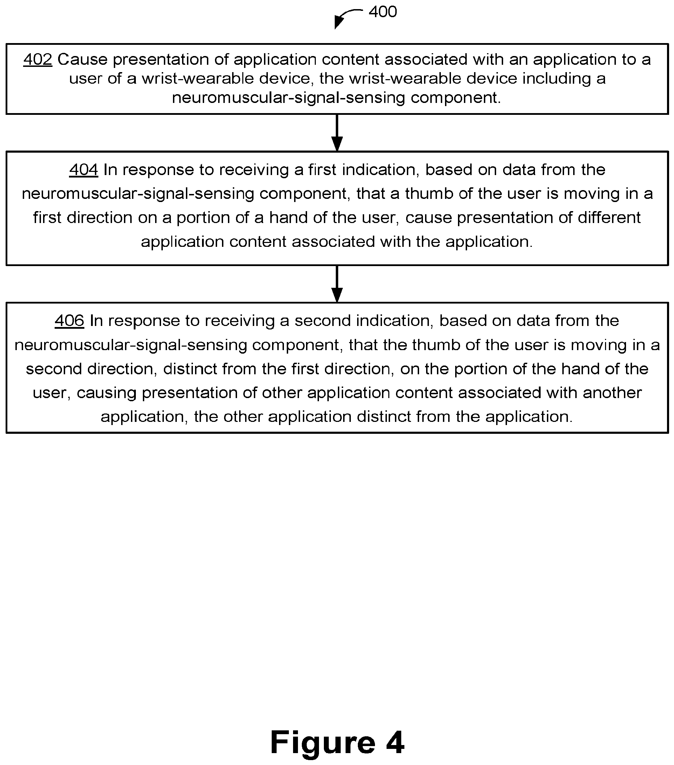

(A1) Figure 4 shows a flow chart of a method 400 of using thumb-based gestures to navigate within and between applications, in accordance with some embodiments.

The method includes causing (402) presentation (e.g., displaying at a touch-screen display of a wrist-wearable device or other mobile device, presenting to a user of an artificial-reality headset) of application content associated with an application (e.g., a user interface enabled by the application) to a user of a wrist-wearable device, the wrist-wearable device including a biopotential-signal-sensing component (e.g., one or more neuromuscular-signal sensors).

The method includes, in response to receiving a first indication, based on data from the biopotential-signal-sensing component (e.g., a detection performed by the biopotential-signal-sensing component, a prompt or other notification provided in response to a triggering detection by the biopotential-signal-sensing component, etc.), that a thumb of the user is moving in a first direction on a portion of a hand of the user (e.g., against a side of the user's index finger), causing (404) presentation of different application content associated with the application (e.g., intra-application content).

The method includes, in response to receiving a second indication, based on data from the biopotential-signal-sensing component, that the thumb of the user is moving in a second direction, distinct from the first direction, on the portion of the hand of the user, causing (406) presentation of other application content associated with another application (e.g., inter-application content), the other application distinct from the application. For example, the application may be a social-media application (e.g., Facebook, Instagram), and the other application may be a messaging application (e.g., Messenger, WhatsApp), and each of the applications has some or entirely distinct content.

(A2) In some embodiments of A1, the first direction is substantially perpendicular to the second direction. That is, the first direction and the second direction may be approximately ninety degrees apart. For example, the first direction may be a direction in which the user's thumb moves in a substantially upward (e.g., within +/- 5 degrees of a direction in which the user's thumb moves upward in a manner that is away from a reference point on the user's wrist). And the second direction is a direction in which the user's thumb moves in a substantially horizontal direction (e.g., within +/- 5 degrees of a direction in which the user's thumb moves leftward or rightward relative to the reference point on the user's wrist)). For example, the gesture that includes the thumb movement 120 in Figure 1C is an example of a thumb-based gesture moving in the first direction and the thumb movement 110 in Figure 1B is an example of a thumb-based gesture moving in the second direction. One of skill in the art will appreciate that the specific implementations of the first and second directions and their associated functions are used interchangeably herein. For example, the first direction as described with respect to the method 400 corresponds to the second direction as described with respect to Figure 1C.

(A3) In some embodiments of A2, the first direction is a horizontal direction starting along a major dimension of an index finger of the user (e.g., along a phalange portion of the user's index finger, such as a proximal phalange of the user's index finger). And the second direction is a vertical direction starting along across a minor dimension of the index finger of the user ((e.g., across at least one phalange portion of the user's index finger). As described herein, the major dimension of the user's index finger is a length (from knuckle to fingertip) of the user's finger, and the minor dimension of the user's index finger is a width (from an outer surface to an inner (e.g., palmar) surface of the user's index finger).

(A4) In some embodiments of A1-A3, the other application content is caused to be presented with a focus selector directed to a selectable user interface element within the other application content. And the method further includes, while the other application content is being presented to the user and the focus selector is directed to the selectable user interface element within the other application content, in response to receiving a third indication, based on data from the biopotential-signal-sensing component, that the thumb of the user is providing a press contact against the portion of the hand of the user, causing performance of an operation associated with the selectable user interface element. That is, the thumb press causes a different intra-application operation than the movement of the user's thumb in the first direction. In other words, a pressing movement of a user's thumb can be used to quickly and intuitively allow for selecting an in-focus user interface element without forcing the user to provide additional navigation inputs to assist with the selection action. Thus, users are able to save time and avoid having to provide additional navigation inputs that might be mis-interpreted and cause a waste of time and forcing of users to back out incorrect inputs. A primary action may correspond to a user interface element that is selected by default within the user interface, such as a selectable user interface element for sending an electronic message to another user from a message-thread user interface. In some embodiments, the user is using a camera application and the primary action associated with a user interface of the camera application causes imaging data to be captured by a camera of the wearable device. In some embodiments, the wearable device continues to capture imaging data while the user holds the pinch gesture. In some embodiments, the primary action does not correspond to an in-focus user interface element, and the primary action remains the same at the user interface even when it does not correspond to a selectable user interface element that is in-focus at the user interface.

(A5) In some embodiments of A4, while the other application is being presented, in conjunction with detecting the third indication that the thumb of the user is providing the press contact, causing an adjustment to a visual characteristic used to present the selectable user interface element as part of the other application content currently being displayed to the user (e.g., causing the selectable user interface element to temporarily expand in size and be presented as overlaying other content within the user interface).

(A6) In some embodiments of A5, causing the adjustment to the visual characteristic used to present the selectable user interface element includes causing presentation of a zoomed-in selection interface. And the zoomed-in selection interface includes selectable user interface elements associated with a set of actions (e.g., one or more actions) presented within a user interface, including the selectable user interface element that remains in focus within the zoomed-in selection interface. For example, Figures 1F-1H show the wrist-wearable device 102 displaying a zoomed-in selection user interface based on the user performing the contact 130 between the thumb and the index finger.

(A7) In some embodiments of A6, the press contact by the thumb of the user against the portion of the hand of the user includes a sustained hold of the press contact. And the method further includes while the zoomed-in selection interface is caused to be presented to the user and the sustained hold of the press contact is being maintained, receiving an indication of a translational movement of the hand (e.g., the thumb movement 148 in Figure 1G, and the thumb movement 149 in Figure 1H). The method further includes, in response to receiving the indication of the translational movement of the hand, adjusting the zoomed-in selection interface such that the focus selector is no longer directed to the selectable user interface element that previously remained in focus, and the focus selector is caused to be directed to a different selectable user interface element within the zoomed-in selection interface. For example, the focus selector is caused to move to respective user interface elements 146 and 144 based on the user 101 performing the respective thumb movements 148 and 149 in Figures 1G and 1H. And the method further includes, while the focus selector is directed to the different selectable user interface element within the zoomed-in selection interface, and in response to a release of the press contact (e.g., the release of the gesture shown in Figure 1I), causing an operation to be performed corresponding to the different selectable user interface element.

(A8) In some embodiments of A4-A7, the method 400 further includes, while the other application content is being presented, and before causing performance of the operation associated with the selectable user interface element, in response to receiving a fourth indication, via the biopotential-signal-sensing component, that the thumb of the user is providing (e.g., performing) a press contact against another portion of the hand of the user, distinct from the portion, causing performance of a secondary operation, distinct from the operation, associated with the selectable user interface element. For example, while the selectable user interface element has the focus selector directed to it (e.g., the circular indication or halo shown around user interface element 132 in Figure 1C), a location of a pressing of the thumb is used to determine whether to perform a primary operation (e.g., taking a picture within a camera application) or a secondary operation (e.g., beginning to record a video within the camera application). In some embodiments, a selectable element corresponding to the secondary action is presented in a sequential arrangement with a selectable element corresponding to the primary action, and each of the selectable elements include visually-perceptible indicia indicating that they are primary and secondary actions. In some embodiments, another selectable element corresponding to a tertiary action is presented in the sequential arrangement, and the selectable element corresponding to the tertiary action can be selected based on a pinch gesture with another different finger of the user. In some embodiments, the portion and/or the other portion are indicated by artificial-reality elements that are presented via an artificial reality headset.

(A9) In some embodiments of any one of A4-A8, while the other application content is being caused to be presented to the user, in response to receiving a fifth indication, based on a sensor distinct biopotential-signal-sensing component (e.g., an inertial measurement unit), of a translational movement of the hand (e.g., the thumb is attached to the arm), causing movement of the focus selector to be directed to a different selectable user interface element, distinct from the selectable user interface element, within the other application content. For example, translational movements (such as arm moving in a substantially horizontal direction) can cause movement of the focus selector to allow for the user making an easy selection (e.g., via the thumb-pressing hand gesture) of the different selectable user interface element.

(A10) In some embodiments of A9, the movement of the focus selector based on receiving the fifth indication of the translational movement of the hand only becomes available to the user after the user has satisfied a predefined usage criterion (e.g., an amount of time, an amount of gestures performed, an amount of achievements unlocked, etc.). In other words, some gestures are not made available until a user has gained a particular level of familiarity with the gesture space provided by the wearable device.

(A11) In some embodiments of any one of A1-A10, before causing presentation of the other application content associated with the other application, the causing presentation of the different application content associated with the application includes causing a scrolling operation within the application to reveal the different application content within the application. That is, the thumb moving in the second direction may not correspond to scrolling of the application content that is being presented to the user. In some embodiments, the thumb moving in the second direction does correspond to movement and/or navigation in some form (e.g., moving between different tabs that are displayed within a user interface that includes the application content and/or the other application content.

(A12) In some embodiments of any one of A1-A11, causing presentation includes causing presentation of respective application content at a display of a wrist-wearable device (e.g., the wrist-wearable device 102 shown in Figures 1A-2I).

(A13) In some embodiments of any one of A1-A12, causing presentation includes causing presentation of respective application content via an artificial-reality headset (e.g., the head-wearable device 104). In some embodiments, respective operations caused in response to receiving the first indication and the second indication are performed at one of (i) the wrist-wearable device, or (ii) the artificial-reality headset, based on an orientation of a hand of the user while each respective indication is detected. For example, an operation may be caused to be performed at the user's artificial-reality headset in accordance with the first indication being received while the user's palm is facing upward, and an operation may be caused to be performed at the user's wrist-wearable device in accordance with the second indication being received while the user's palm is facing downward.

(A14) In some embodiments of any one of A1-A13, the first indication and the second indication are further based on the thumb of the user remaining in contact with the portion of the hand of the user while the user is moving the thumb in the first and second directions.

(A15) In some embodiments of any one of A1-A14, the first indication and the second indication are not provided in accordance with respective thumb movements that include contact with a touch-sensitive display of an electronic device.

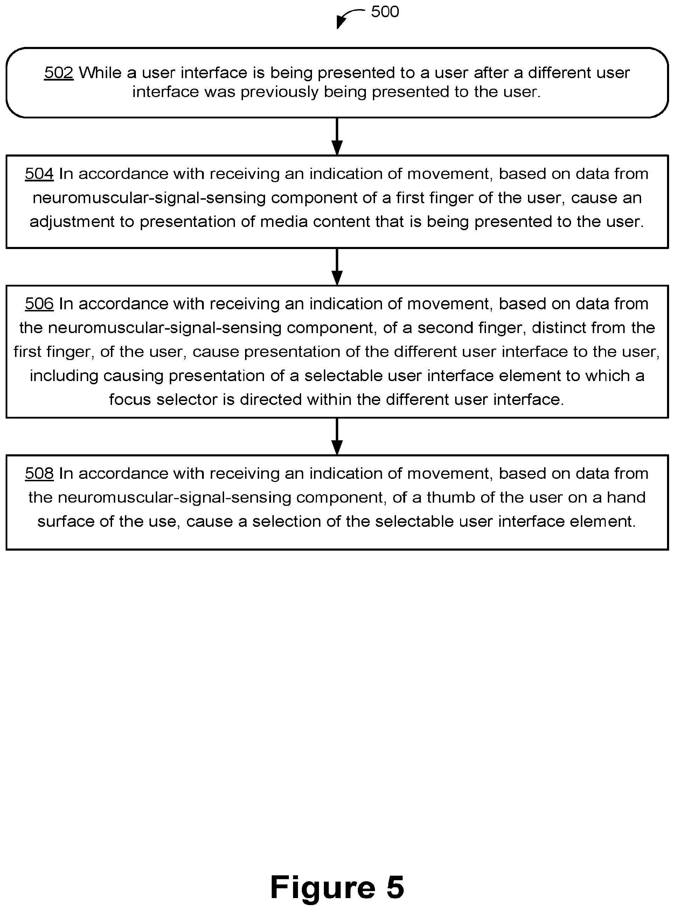

(B1) Figure 5 shows a flow chart of a method 500 of providing an efficient and intuitive gesture space for facilitating interactions with a wrist-wearable device, in accordance with some embodiments.

One or more of the operations discussed with respect to the method 500 are performed while (502) a user interface is being presented to a user after a different user interface (e.g., a home-screen user interface, which may be a watch-screen user interface) was previously being presented to the user. For example, the user 101 is viewing a scrollable feed user interface in Figure 2G after viewing a watch face user interface in Figure 2A, and after performing the contact 246 shown in Figure 2G, the wrist-wearable device is caused to presented the watch-face user interface that was presented in Figure 2A.

The method 500 includes, in accordance with receiving (504) an indication of movement (e.g., a pinch gesture), based on data from a biopotential-signal-sensing component(e.g., a detection performed by the biopotential-signal-sensing component, a prompt or other notification provided in response to a triggering detection by the biopotential-signal-sensing component, etc.), of a first finger of the user (e.g., the user's index finger, a user-assigned media control finger), causing an adjustment to presentation of media content that is being presented to the user (e.g., selecting inputs, media control, such as play and pause, and including operating-system-level media settings, such as a volume of speakers of the electronic device). For example, Figures 2H-2I show the user 101 performing a media control command that adjusts a volume at the wrist-wearable device 102.

One of skill in the art will appreciate that in some embodiments, a gesture space may include operations corresponding to the thumb movements and/or the middle finger movements (e.g., movements of the second finger) and not operations corresponding to movement of the first finger.

The method 500 includes, in accordance with receiving (506) an indication of movement, based on data from the biopotential-signal-sensing component (e.g., a detection performed by the biopotential-signal-sensing component, a prompt or other notification provided in response to a triggering detection by the biopotential-signal-sensing component, etc.), of a second finger, distinct from the first finger, of the user (e.g., the user's middle finger, a user-assigned flow control finger), causing presentation of the different user interface to the user, including causing presentation of a selectable user interface element to which a focus selector is directed within the different user interface.

The method 500 includes, in accordance with receiving (508) an indication of a pressing movement, based on data from the biopotential-signal-sensing component (e.g., a detection performed by the biopotential-signal-sensing component, a prompt or other notification provided in response to a triggering detection by the biopotential-signal-sensing component, etc.), of a thumb of the user on a hand surface of the user (e.g., a press of the user's thumb on top of a side (e.g., a phalange, such as the proximal phalange) of the index finger), causing a selection of the selectable user interface element.

(B2) In some embodiments of B1, the movement of the second finger includes a contact between the second finger of the user and the thumb of the user (e.g., a middle finger pinch content). And the different user interface that is caused to be presented in accordance with receiving the indication of the movement of the second finger is a home-screen user interface (e.g., a wake-screen user interface, a clock-face user interface, etc.).

(B3) In some embodiments of any one of B1-B2, the first finger, the second finger, and the thumb are on a hand of the user. And, based on a determination that the movement of the first finger occurred in conjunction with a translational movement of the hand, the adjusting of the presentation of the media content that is being presented is in accordance with a magnitude of the translational movement of the hand. For example, there can be a particular angular rotation corresponding to the rotation of the hand of the user 101 shown in Figure 2I. And an amount of volume adjustment at the wrist-wearable device or another electronic device can be based on the angular rotation, and/or the speed of the movement of the hand.

(B4) In some embodiments of B3, the movement of the first finger is part of a pinch contact between the first finger and the thumb of the user that is maintained while a movement of the hand occurs (e.g., a sustained pinch contact). And the pinch contact causes an initial selection of a media-control setting associated with a plurality of values and the movement of the hand causes a selection of one of the plurality of values in accordance with the magnitude of the translational movement of the hand. In some embodiments, movement of the hand can be either or both of rotational, or translational movement of the hand in three-dimensional space, rather than movement of individual digits on the hand. For example, the user 101 could cause the same adjustment to the volume as caused by the gesture shown in Figure 2I by performing the same contact 262 in conjunction with translating the hand upward in three-dimensional space.

(B5) In some embodiments of any one of B1-B4, the movement of the second finger of the user includes a sustained pinch contact between the second finger and the thumb of the user. And the method 500 further includes, in accordance with a determination that the movement of the second finger occurred in conjunction with movement of the hand of the user within a predefined hold time after initiation of the sustained pinch contact: (i) causing an application-switching user interface to be displayed, wherein the movement of the hand of the user causes a focus selector within the application-switching user interface to move between respective representations of previously-presented applications, and (ii) after the user releases the sustained pinch contact, causing selection of an application that includes the different user interface and causing presentation of the different user interface. For example, the watch-face user interface is presented in Figure 2H based on the user 101 performing the contact 246 in Figure 2G.

(B6) In some embodiments of any one of B1-B5, the method 500 further includes, after detecting respective movements of the first finger, the second finger, and the thumb, in accordance with (i) detecting another gesture that includes a movement of one of the first finger, the second finger, and the thumb, and (ii) a determination that a wrist-wearable device is in electronic communication with a physical electronic device that is separate from the user, causing an operation to be performed at the physical electronic device (e.g., the head-wearable device 104, a television that is capable of forming a wireless connection with the wrist-wearable device 102).

(B7) In some embodiments of any one of B1-B6, none of the respective movements of the first finger, second finger, or thumb include contact with a display of an electronic device (e.g., a touch-sensitive display). In some embodiments, the first, second, and third hand gestures are all in-air hand gestures that do not include contact with any physical objects. For example none of the hand gestures shown in Figures 1A-2I include contact with the display of the wrist-wearable device 102.

(B8) In some embodiments of any one of B1-B7, the user interface and the different user interface are caused to be presented at a display of a wrist-wearable device (e.g., the display of the wrist-wearable device 102 shown in Figures 1A-2I).

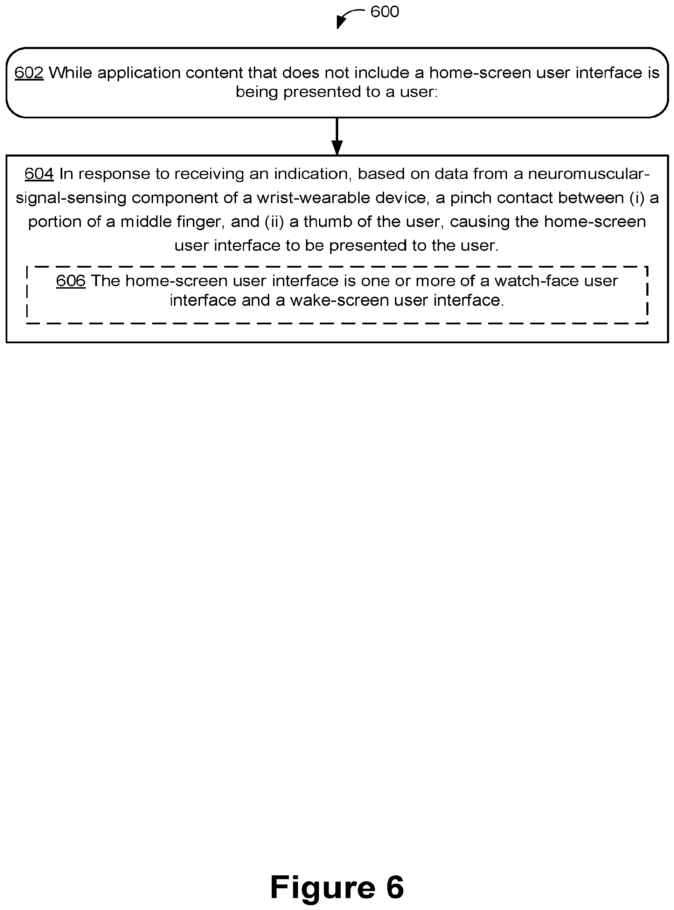

(C1) Figure 6 shows a flow chart of a method 600 of returning to a home-screen user interface based on a predefined universal home gesture of a gesture space comprised of hand gestures, in accordance with some embodiments. One or more operations of the method 600 are performed while (602) application content (e.g., a user interface associated with an installed application) that does not include a home-screen user interface is being presented to a user.

The method 600 includes, in response to receiving (604) an indication, based on data from a biopotential-signal-sensing component of a wrist-wearable device, a pinch contact between (i) a portion of a middle finger of the user (e.g., the fingertip of the middle finger, a particular phalange of the middle finger), and (ii) a thumb of the user, causing the home-screen user interface to be presented to the user. That is, the home-screen user interface is an operating-system-level home-screen user interface. For example, the hand gesture shown in Figure 2G includes the contact 246 that causes the watch-face user interface to be presented. In some embodiments, the contact 246 causes the watch-face user interface to be presented regardless of the specific user interface that was previously presented by the wrist-wearable device 102.

(C2) In some embodiments of C1, the home-screen user interface is (606) one or more of a watch-face user interface and a wake-screen user interface. In some embodiments, the watch-face user interface includes selectable user-interface elements that correspond to different applications that the user can access via the wrist-wearable device (e.g., an application associated with the watch-face user interface 112 shown in Figure 1B, and a different application associated with the message-thread user interface 122 shown in Figure 1C). In some embodiments, an indication (e.g., a focus selector) is configured to indicate that one of the application user interface elements is currently in focus. And based on a thumb movement in a second direction, the display of the wrist-wearable device can be caused to display a user interface of the application that the in-focus user interface element corresponds to.

(D1) In accordance with some embodiments, a system that includes one or more wrist wearable devices (e.g., the wrist-wearable device 102) and an artificial-reality headset (e.g., the head-wearable device 104), and the system is configured to perform operations corresponding to any of A1-C2.

(E1) In accordance with some embodiments, a non-transitory computer readable storage medium including instructions that, when executed by a computing device in communication with an artificial-reality headset, cause the computer device to perform operations corresponding to any of A1-A20.

(F1) In accordance with some embodiments, a method of operating an artificial reality headset, including operations that correspond to any of A1-A20.

The devices described above are further detailed below, including wrist-wearable devices, headset devices, systems, and haptic feedback devices. Specific operations described above may occur as a result of specific hardware, such hardware is described in further detail below. The devices described below are not limiting and features on these devices can be removed or additional features can be added to these devices.

The devices described above are further detailed below, including systems, wrist-wearable devices, headset devices, and smart textile-based garments. Specific operations described above may occur as a result of specific hardware, such hardware is described in further detail below. The devices described below are not limiting and features on these devices can be removed or additional features can be added to these devices. The different devices can include one or more analogous hardware components. For brevity, analogous devices and components are described below. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device 800, a head-wearable device, an HIPD 1000, a smart textile-based garment (not shown), or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., virtual-reality animations, such as three-dimensional modeling); (iv) a field-programmable gate array (FPGA) that can be programmed and reconfigured after manufacturing and/or customized to perform specific tasks, such as signal processing, cryptography, and machine learning; (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or DSPs. As described herein, a graphics module is a component or software module that is designed to handle graphical operations and/or processes, and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include: (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) POGO pins, which may be small, spring-loaded pins configured to provide a charging interface; (v) wireless charging interfaces; (vi) global-position system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device); (ii) biopotential-signal sensors; (iii) inertial measurement unit (e.g., IMUs) for detecting, for example, angular rate, force, magnetic field, and/or changes in acceleration; (iv) heart rate sensors for measuring a user's heart rate; (v) SpO2 sensors for measuring blood oxygen saturation and/or other biometric data of a user; (vi) capacitive sensors for detecting changes in potential at a portion of a user's body (e.g., a sensor-skin interface) and/or the proximity of other devices or objects; and (vii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include: (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) electromyography (EMG) sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications, (x) camera applications, (xi) web-based applications; (xii) health applications; (xiii) artificial-reality (AR) applications, and/or any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). In some embodiments, a communication interface can refer to a software layer that enables different software programs to communicate with each other (e.g., application programming interfaces (APIs) and protocols such as HTTP and TCP/IP).

As described herein, a graphics module is a component or software module that is designed to handle graphical operations and/or processes, and can include a hardware module and/or a software module.

As described herein, non-transitory computer-readable storage media are physical devices or storage medium that can be used to store electronic data in a non-transitory form (e.g., such that the data is stored permanently until it is intentionally deleted or modified).

### Example AR Systems

Figures 7A and 7B illustrate example artificial-reality systems, in accordance with some embodiments. Figure 7A shows a first AR system 700a and first example user interactions using a wrist-wearable device 800, a head-wearable device (e.g., AR device 900), and/or a handheld intermediary processing device (HIPD) 1000. Figure 7B shows a second AR system 700b and second example user interactions using a wrist-wearable device 800, AR device 900, and/or an HIPD 1000. As the skilled artisan will appreciate upon reading the descriptions provided herein, the above-example AR systems (described in detail below) can perform various functions and/or operations described above with reference to Figures 1A-6.

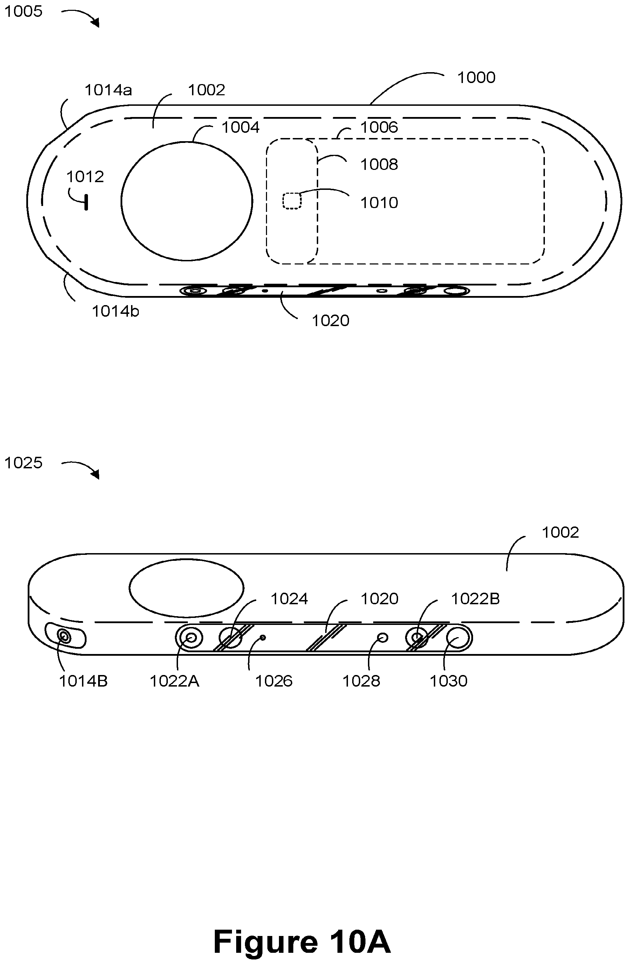

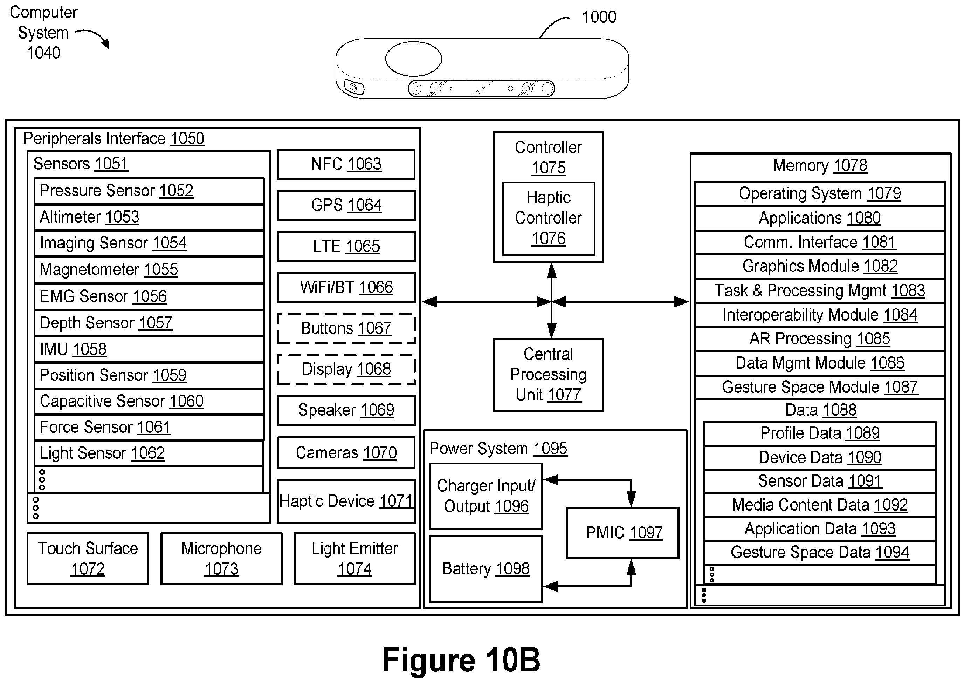

The wrist-wearable device 800 and its constituent components are described below in reference to Figures 8A and 8B, the head-wearable devices and their constituent components are described below in reference to Figures 9A-9D, and the HIPD 1000 and its constituent components are described below in reference to Figures 10A and 10B. The wrist-wearable device 800, the head-wearable devices, and/or the HIPD 1000 can communicatively couple via a network 725 (e.g., cellular, near field, Wi-Fi, personal area network, wireless LAN, etc.). Additionally, the wrist-wearable device 800, the head-wearable devices, and/or the HIPD 1000 can also communicatively couple with one or more servers 730, computers 740 (e.g., laptops, computers, etc.), mobile devices 750 (e.g., smartphones, tablets, etc.), and/or other electronic devices via the network 725 (e.g., cellular, near field, Wi-Fi, personal area network, wireless LAN, etc.)

Turning to Figure 7A, a user 702 is shown wearing the wrist-wearable device 800 and the AR device 900, and having the HIPD 1000 on their desk. The wrist-wearable device 800, the AR device 900, and the HIPD 1000 facilitate user interaction with an AR environment. In particular, as shown by the first AR system 700a, the wrist-wearable device 800, the AR device 900, and/or the HIPD 1000 cause presentation of one or more avatars 704, digital representations of contacts 706, and virtual objects 708. As discussed below, the user 702 can interact with the one or more avatars 704, digital representations of the contacts 706, and virtual objects 708 via the wrist-wearable device 800, the AR device 900, and/or the HIPD 1000.

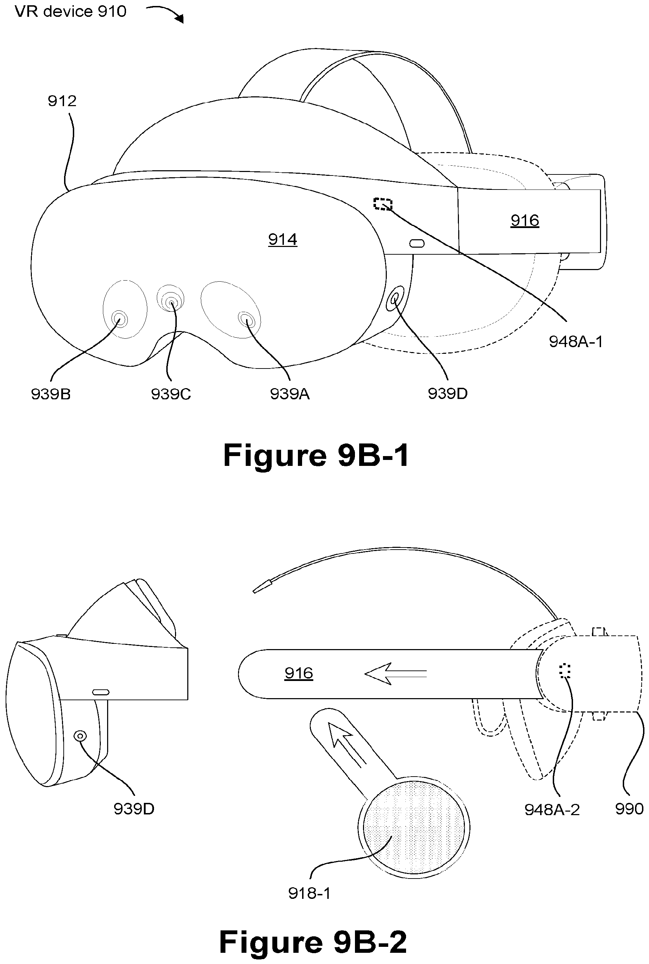

The user 702 can use any of the wrist-wearable device 800, the AR device 900, and/or the HIPD 1000 to provide user inputs. For example, the user 702 can perform one or more hand gestures that are detected by the wrist-wearable device 800 (e.g., using one or more EMG sensors and/or IMUs, described below in reference to Figures 8A and 8B) and/or AR device 900 (e.g., using one or more image sensors or cameras, described below in reference to Figures 9A and 9B) to provide a user input. Alternatively, or additionally, the user 702 can provide a user input via one or more touch surfaces of the wrist-wearable device 800, the AR device 900, and/or the HIPD 1000, and/or voice commands captured by a microphone of the wrist-wearable device 800, the AR device 900, and/or the HIPD 1000. In some embodiments, the wrist-wearable device 800, the AR device 900, and/or the HIPD 1000 include a digital assistant to help the user in providing a user input (e.g., completing a sequence of operations, suggesting different operations or commands, providing reminders, confirming a command). In some embodiments, the user 702 can provide a user input via one or more facial gestures and/or facial expressions. For example, cameras of the wrist-wearable device 800, the AR device 900, and/or the HIPD 1000 can track the user 702's eyes for navigating a user interface.

The wrist-wearable device 800, the AR device 900, and/or the HIPD 1000 can operate alone or in conjunction to allow the user 702 to interact with the AR environment. In some embodiments, the HIPD 1000 is configured to operate as a central hub or control center for the wrist-wearable device 800, the AR device 900, and/or another communicatively coupled device. For example, the user 702 can provide an input to interact with the AR environment at any of the wrist-wearable device 800, the AR device 900, and/or the HIPD 1000, and the HIPD 1000 can identify one or more back-end and front-end tasks to cause the performance of the requested interaction and distribute instructions to cause the performance of the one or more back-end and front-end tasks at the wrist-wearable device 800, the AR device 900, and/or the HIPD 1000. In some embodiments, a back-end task is a background-processing task that is not perceptible by the user (e.g., rendering content, decompression, compression, etc.), and a front-end task is a user-facing task that is perceptible to the user (e.g., presenting information to the user, providing feedback to the user, etc.)). As described below in reference to Figures 10A-10B, the HIPD 1000 can perform the back-end tasks and provide the wrist-wearable device 800 and/or the AR device 900 operational data corresponding to the performed back-end tasks such that the wrist-wearable device 800 and/or the AR device 900 can perform the front-end tasks. In this way, the HIPD 1000, which has more computational resources and greater thermal headroom than the wrist-wearable device 800 and/or the AR device 900, performs computationally intensive tasks and reduces the computer resource utilization and/or power usage of the wrist-wearable device 800 and/or the AR device 900.

In the example shown by the first AR system 700a, the HIPD 1000 identifies one or more back-end tasks and front-end tasks associated with a user request to initiate an AR video call with one or more other users (represented by the avatar 704 and the digital representation of the contact 706) and distributes instructions to cause the performance of the one or more back-end tasks and front-end tasks. In particular, the HIPD 1000 performs back-end tasks for processing and/or rendering image data (and other data) associated with the AR video call and provides operational data associated with the performed back-end tasks to the AR device 900 such that the AR device 900 performs front-end tasks for presenting the AR video call (e.g., presenting the avatar 704 and the digital representation of the contact 706).

In some embodiments, the HIPD 1000 can operate as a focal or anchor point for causing the presentation of information. This allows the user 702 to be generally aware of where information is presented. For example, as shown in the first AR system 700a, the avatar 704 and the digital representation of the contact 706 are presented above the HIPD 1000. In particular, the HIPD 1000 and the AR device 900 operate in conjunction to determine a location for presenting the avatar 704 and the digital representation of the contact 706. In some embodiments, information can be presented within a predetermined distance from the HIPD 1000 (e.g., within five meters). For example, as shown in the first AR system 700a, virtual object 708 is presented on the desk some distance from the HIPD 1000. Similar to the above example, the HIPD 1000 and the AR device 900 can operate in conjunction to determine a location for presenting the virtual object 708. Alternatively, in some embodiments, presentation of information is not bound by the HIPD 1000. More specifically, the avatar 704, the digital representation of the contact 706, and the virtual object 708 do not have to be presented within a predetermined distance of the HIPD 1000.

User inputs provided at the wrist-wearable device 800, the AR device 900, and/or the HIPD 1000 are coordinated such that the user can use any device to initiate, continue, and/or complete an operation. For example, the user 702 can provide a user input to the AR device 900 to cause the AR device 900 to present the virtual object 708 and, while the virtual object 708 is presented by the AR device 900, the user 702 can provide one or more hand gestures via the wrist-wearable device 800 to interact and/or manipulate the virtual object 708.

Figure 7B shows the user 702 wearing the wrist-wearable device 800 and the AR device 900, and holding the HIPD 1000. In the second AR system 700b, the wrist-wearable device 800, the AR device 900, and/or the HIPD 1000 are used to receive and/or provide one or more messages to a contact of the user 702. In particular, the wrist-wearable device 800, the AR device 900, and/or the HIPD 1000 detect and coordinate one or more user inputs to initiate a messaging application and prepare a response to a received message via the messaging application.

In some embodiments, the user 702 initiates, via a user input, an application on the wrist-wearable device 800, the AR device 900, and/or the HIPD 1000 that causes the application to initiate on at least one device. For example, in the second AR system 700b the user 702 performs a hand gesture associated with a command for initiating a messaging application (represented by messaging user interface 712); the wrist-wearable device 800 detects the hand gesture; and, based on a determination that the user 702 is wearing AR device 900, causes the AR device 900 to present a messaging user interface 712 of the messaging application. The AR device 900 can present the messaging user interface 712 to the user 702 via its display (e.g., as shown by user 702's field of view 710). In some embodiments, the application is initiated and can be run on the device (e.g., the wrist-wearable device 800, the AR device 900, and/or the HIPD 1000) that detects the user input to initiate the application, and the device provides another device operational data to cause the presentation of the messaging application. For example, the wrist-wearable device 800 can detect the user input to initiate a messaging application, initiate and run the messaging application, and provide operational data to the AR device 900 and/or the HIPD 1000 to cause presentation of the messaging application. Alternatively, the application can be initiated and run at a device other than the device that detected the user input. For example, the wrist-wearable device 800 can detect the hand gesture associated with initiating the messaging application and cause the HIPD 1000 to run the messaging application and coordinate the presentation of the messaging application.

Further, the user 702 can provide a user input provided at the wrist-wearable device 800, the AR device 900, and/or the HIPD 1000 to continue and/or complete an operation initiated at another device. For example, after initiating the messaging application via the wrist-wearable device 800 and while the AR device 900 presents the messaging user interface 712, the user 702 can provide an input at the HIPD 1000 to prepare a response (e.g., shown by the swipe gesture performed on the HIPD 1000). The user 702's gestures performed on the HIPD 1000 can be provided and/or displayed on another device. For example, the user 702's swipe gestures performed on the HIPD 1000 are displayed on a virtual keyboard of the messaging user interface 712 displayed by the AR device 900.

In some embodiments, the wrist-wearable device 800, the AR device 900, the HIPD 1000, and/or other communicatively coupled devices can present one or more notifications to the user 702. The notification can be an indication of a new message, an incoming call, an application update, a status update, etc. The user 702 can select the notification via the wrist-wearable device 800, the AR device 900, or the HIPD 1000 and cause presentation of an application or operation associated with the notification on at least one device. For example, the user 702 can receive a notification that a message was received at the wrist-wearable device 800, the AR device 900, the HIPD 1000, and/or other communicatively coupled device and provide a user input at the wrist-wearable device 800, the AR device 900, and/or the HIPD 1000 to review the notification, and the device detecting the user input can cause an application associated with the notification to be initiated and/or presented at the wrist-wearable device 800, the AR device 900, and/or the HIPD 1000.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 900 can present to the user 702 game application data and the HIPD 1000 can use a controller to provide inputs to the game. Similarly, the user 702 can use the wrist-wearable device 800 to initiate a camera of the AR device 900, and the user can use the wrist-wearable device 800, the AR device 900, and/or the HIPD 1000 to manipulate the image capture (e.g., zoom in or out, apply filters, etc.) and capture image data.

Having discussed example AR systems, devices for interacting with such AR systems, and other computing systems more generally, will now be discussed in greater detail below. Some definitions of devices and components that can be included in some or all of the example devices discussed below are defined here for ease of reference. A skilled artisan will appreciate that certain types of the components described below may be more suitable for a particular set of devices, and less suitable for a different set of devices. But subsequent reference to the components defined here should be considered to be encompassed by the definitions provided.

In some embodiments discussed below example devices and systems, including electronic devices and systems, will be discussed. Such example devices and systems are not intended to be limiting, and one of skill in the art will understand that alternative devices and systems to the example devices and systems described herein may be used to perform the operations and construct the systems and device that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

### Example Wrist-Wearable Devices

Figures 8A and 8B illustrate an example wrist-wearable device 800, in accordance with some embodiments. The wrist-wearable device 800 is an instance of the wearable device 102 described in reference to Figures 1A-6 herein, such that the wrist-wearable device 102 should be understood to have the features of the wrist-wearable device 800 and vice versa. Figure 8A illustrates components of the wrist-wearable device 800, which can be used individually or in combination, including combinations that include other electronic devices and/or electronic components.

Figure 8A shows a wearable band 810 and a watch body 820 (or capsule) being coupled, as discussed below, to form the wrist-wearable device 800. The wrist-wearable device 800 can perform various functions and/or operations associated with navigating through user interfaces and selectively opening applications, as well as the functions and/or operations described above with reference to Figures 1A-6.

As will be described in more detail below, operations executed by the wrist-wearable device 800 can include (i) presenting content to a user (e.g., displaying visual content via a display 805); (ii) detecting (e.g., sensing) user input (e.g., sensing a touch on peripheral button 823 and/or at a touch screen of the display 805, a hand gesture detected by sensors (e.g., biopotential sensors)); (iii) sensing biometric data via one or more sensors 813 (e.g., neuromuscular signals, heart rate, temperature, sleep, etc.); messaging (e.g., text, speech, video, etc.); image capture via one or more imaging devices or cameras 825; wireless communications (e.g., cellular, near field, Wi-Fi, personal area network, etc.); location determination; financial transactions; providing haptic feedback; alarms; notifications; biometric authentication; health monitoring; sleep monitoring.

The above-example functions can be executed independently in the watch body 820, independently in the wearable band 810, and/or via an electronic communication between the watch body 820 and the wearable band 810. In some embodiments, functions can be executed on the wrist-wearable device 800 while an AR environment is being presented (e.g., via one of the AR systems 700a and 700b). As the skilled artisan will appreciate upon reading the descriptions provided herein, the novel wearable devices described herein can be used with other types of AR environments.

The wearable band 810 can be configured to be worn by a user such that an inner (or inside) surface of the wearable structure 811 of the wearable band 810 is in contact with the user's skin. When worn by a user, sensors 813 contact the user's skin. The sensors 813 can sense biometric data such as a user's heart rate, saturated oxygen level, temperature, sweat level, neuromuscular signal sensors, or a combination thereof. The sensors 813 can also sense data about a user's environment, including a user's motion, altitude, location, orientation, gait, acceleration, position, or a combination thereof. In some embodiments, the sensors 813 are configured to track a position and/or motion of the wearable band 810. The one or more sensors 813 can include any of the sensors defined above and/or discussed below with respect to Figure 8B.

The one or more sensors 813 can be distributed on an inside and/or an outside surface of the wearable band 810. In some embodiments, the one or more sensors 813 are uniformly spaced along the wearable band 810. Alternatively, in some embodiments, the one or more sensors 813 are positioned at distinct points along the wearable band 810. As shown in Figure 8A, the one or more sensors 813 can be the same or distinct. For example, in some embodiments, the one or more sensors 813 can be shaped as a pill (e.g., sensor 813a), an oval, a circle a square, an oblong (e.g., sensor 813c) and/or any other shape that maintains contact with the user's skin (e.g., such that neuromuscular signal and/or other biometric data can be accurately measured at the user's skin). In some embodiments, the one or more sensors 813 are aligned to form pairs of sensors (e.g., for sensing neuromuscular signals based on differential sensing within each respective sensor). For example, sensor 813b is aligned with an adjacent sensor to form sensor pair 814a and sensor 813d is aligned with an adjacent sensor to form sensor pair 814b. In some embodiments, the wearable band 810 does not have a sensor pair. Alternatively, in some embodiments, the wearable band 810 has a predetermined number of sensor pairs (one pair of sensors, three pairs of sensors, four pairs of sensors, six pairs of sensors, sixteen pairs of sensors, etc.).

The wearable band 810 can include any suitable number of sensors 813. In some embodiments, the number and arrangements of sensors 813 depend on the particular application for which the wearable band 810 is used. For instance, a wearable band 810 configured as an armband, wristband, or chest-band may include a plurality of sensors 813 with different number of sensors 813 and different arrangement for each use case, such as medical use cases, compared to gaming or general day-to-day use cases.

In accordance with some embodiments, the wearable band 810 further includes an electrical ground electrode and a shielding electrode. The electrical ground and shielding electrodes, like the sensors 813, can be distributed on the inside surface of the wearable band 810 such that they contact a portion of the user's skin. For example, the electrical ground and shielding electrodes can be at an inside surface of coupling mechanism 816 or an inside surface of a wearable structure 811. The electrical ground and shielding electrodes can be formed and/or use the same components as the sensors 813. In some embodiments, the wearable band 810 includes more than one electrical ground electrode and more than one shielding electrode.

The sensors 813 can be formed as part of the wearable structure 811 of the wearable band 810. In some embodiments, the sensors 813 are flush or substantially flush with the wearable structure 811 such that they do not extend beyond the surface of the wearable structure 811. While flush with the wearable structure 811, the sensors 813 are still configured to contact the user's skin (e.g., via a skin-contacting surface). Alternatively, in some embodiments, the sensors 813 extend beyond the wearable structure 811 a predetermined distance (e.g., 0.1 mm to 2 mm) to make contact and depress into the user's skin. In some embodiments, the sensors 813 are coupled to an actuator (not shown) configured to adjust an extension height (e.g., a distance from the surface of the wearable structure 811) of the sensors 813 such that the sensors 813 make contact and depress into the user's skin. In some embodiments, the actuators adjust the extension height between 0.01 mm to 1.2 mm. This allows the user to customize the positioning of the sensors 813 to improve the overall comfort of the wearable band 810 when worn while still allowing the sensors 813 to contact the user's skin. In some embodiments, the sensors 813 are indistinguishable from the wearable structure 811 when worn by the user.

The wearable structure 811 can be formed of an elastic material, elastomers, etc., configured to be stretched and fitted to be worn by the user. In some embodiments, the wearable structure 811 is a textile or woven fabric. As described above, the sensors 813 can be formed as part of a wearable structure 811. For example, the sensors 813 can be molded into the wearable structure 811 or be integrated into a woven fabric (e.g., the sensors 813 can be sewn into the fabric and mimic the pliability of fabric (e.g., the sensors 813 can be constructed from a series of woven strands of fabric)).

The wearable structure 811 can include flexible electronic connectors that interconnect the sensors 813, the electronic circuitry, and/or other electronic components (described below in reference to Figure 8B) that are enclosed in the wearable band 810. In some embodiments, the flexible electronic connectors are configured to interconnect the sensors 813, the electronic circuitry, and/or other electronic components of the wearable band 810 with respective sensors and/or other electronic components of another electronic device (e.g., watch body 820). The flexible electronic connectors are configured to move with the wearable structure 811 such that the user adjustment to the wearable structure 811 (e.g., resizing, pulling, folding, etc.) does not stress or strain the electrical coupling of components of the wearable band 810.

As described above, the wearable band 810 is configured to be worn by a user. In particular, the wearable band 810 can be shaped or otherwise manipulated to be worn by a user. For example, the wearable band 810 can be shaped to have a substantially circular shape such that it can be configured to be worn on the user's lower arm or wrist. Alternatively, the wearable band 810 can be shaped to be worn on another body part of the user, such as the user's upper arm (e.g., around a bicep), forearm, chest, legs, etc. The wearable band 810 can include a retaining mechanism 812 (e.g., a buckle, a hook and loop fastener, etc.) for securing the wearable band 810 to the user's wrist or other body part. While the wearable band 810 is worn by the user, the sensors 813 sense data (referred to as sensor data) from the user's skin. In particular, the sensors 813 of the wearable band 810 obtain (e.g., sense and record) neuromuscular signals.

The sensed data (e.g., sensed neuromuscular signals) can be used to detect and/or determine the user's intention to perform certain motor actions. In particular, the sensors 813 sense and record neuromuscular signals from the user as the user performs muscular activations (e.g., movements, gestures, etc.). The detected and/or determined motor actions (e.g., phalange (or digits) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on the display 805 of the wrist-wearable device 800 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table; dynamic gestures, such as grasping a physical or virtual object; and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by the sensors 813 can be used to provide a user with an enhanced interaction with a physical object (e.g., devices communicatively coupled with the wearable band 810) and/or a virtual object in an artificial-reality application generated by an artificial-reality system (e.g., user interface objects presented on the display 805 or another computing device (e.g., a smartphone)).

In some embodiments, the wearable band 810 includes one or more haptic devices 846 (Figure 8B; e.g., a vibratory haptic actuator) that are configured to provide haptic feedback (e.g., a cutaneous and/or kinesthetic sensation, etc.) to the user's skin. The sensors 813, and/or the haptic devices 846 can be configured to operate in conjunction with multiple applications including, without limitation, health monitoring, social media, games, and artificial reality (e.g., the applications associated with artificial reality).

The wearable band 810 can also include coupling mechanism 816 (e.g., a cradle or a shape of the coupling mechanism can correspond to shape of the watch body 820 of the wrist-wearable device 800) for detachably coupling a capsule (e.g., a computing unit) or watch body 820 (via a coupling surface of the watch body 820) to the wearable band 810. In particular, the coupling mechanism 816 can be configured to receive a coupling surface proximate to the bottom side of the watch body 820 (e.g., a side opposite to a front side of the watch body 820 where the display 805 is located), such that a user can push the watch body 820 downward into the coupling mechanism 816 to attach the watch body 820 to the coupling mechanism 816. In some embodiments, the coupling mechanism 816 can be configured to receive a top side of the watch body 820 (e.g., a side proximate to the front side of the watch body 820 where the display 805 is located) that is pushed upward into the cradle, as opposed to being pushed downward into the coupling mechanism 816. In some embodiments, the coupling mechanism 816 is an integrated component of the wearable band 810 such that the wearable band 810 and the coupling mechanism 816 are a single unitary structure. In some embodiments, the coupling mechanism 816 is a type of frame or shell that allows the watch body 820 coupling surface to be retained within or on the wearable band 810 coupling mechanism 816 (e.g., a cradle, a tracker band, a support base, a clasp, etc.).

The coupling mechanism 816 can allow for the watch body 820 to be detachably coupled to the wearable band 810 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 820 to the wearable band 810 and to decouple the watch body 820 from the wearable band 810. For example, a user can twist, slide, turn, push, pull, or rotate the watch body 820 relative to the wearable band 810, or a combination thereof, to attach the watch body 820 to the wearable band 810 and to detach the watch body 820 from the wearable band 810. Alternatively, as discussed below, in some embodiments, the watch body 820 can be decoupled from the wearable band 810 by actuation of the release mechanism 829.

The wearable band 810 can be coupled with a watch body 820 to increase the functionality of the wearable band 810 (e.g., converting the wearable band 810 into a wrist-wearable device 800, adding an additional computing unit and/or battery to increase computational resources and/or a battery life of the wearable band 810, adding additional sensors to improve sensed data, etc.). As described above, the wearable band 810 (and the coupling mechanism 816) is configured to operate independently (e.g., execute functions independently) from watch body 820. For example, the coupling mechanism 816 can include one or more sensors 813 that contact a user's skin when the wearable band 810 is worn by the user and provide sensor data for determining control commands.

A user can detach the watch body 820 (or capsule) from the wearable band 810 in order to reduce the encumbrance of the wrist-wearable device 800 to the user. For embodiments in which the watch body 820 is removable, the watch body 820 can be referred to as a removable structure, such that in these embodiments the wrist-wearable device 800 includes a wearable portion (e.g., the wearable band 810) and a removable structure (the watch body 820).

Turning to the watch body 820, the watch body 820 can have a substantially rectangular or circular shape. The watch body 820 is configured to be worn by the user on their wrist or on another body part. More specifically, the watch body 820 is sized to be easily carried by the user, attached on a portion of the user's clothing, and/or coupled to the wearable band 810 (forming the wrist-wearable device 800). As described above, the watch body 820 can have a shape corresponding to the coupling mechanism 816 of the wearable band 810. In some embodiments, the watch body 820 includes a single release mechanism 829 or multiple release mechanisms (e.g., two release mechanisms 829 positioned on opposing sides of the watch body 820, such as spring-loaded buttons) for decoupling the watch body 820 and the wearable band 810. The release mechanism 829 can include, without limitation, a button, a knob, a plunger, a handle, a lever, a fastener, a clasp, a dial, a latch, or a combination thereof.

A user can actuate the release mechanism 829 by pushing, turning, lifting, depressing, shifting, or performing other actions on the release mechanism 829. Actuation of the release mechanism 829 can release (e.g., decouple) the watch body 820 from the coupling mechanism 816 of the wearable band 810, allowing the user to use the watch body 820 independently from wearable band 810, and vice versa. For example, decoupling the watch body 820 from the wearable band 810 can allow the user to capture images using rear-facing camera 825B. Although the coupling mechanism 816 is shown positioned at a corner of watch body 820, the release mechanism 829 can be positioned anywhere on watch body 820 that is convenient for the user to actuate. In addition, in some embodiments, the wearable band 810 can also include a respective release mechanism for decoupling the watch body 820 from the coupling mechanism 816. In some embodiments, the release mechanism 829 is optional and the watch body 820 can be decoupled from the coupling mechanism 816 as described above (e.g., via twisting, rotating, etc.).

The watch body 820 can include one or more peripheral buttons 823 and 827 for performing various operations at the watch body 820. For example, the peripheral buttons 823 and 827 can be used to turn on or wake (e.g., transition from a sleep state to an active state) the display 805, unlock the watch body 820, increase or decrease a volume, increase or decrease brightness, interact with one or more applications, interact with one or more user interfaces, etc. Additionally, or alternatively, in some embodiments, the display 805 operates as a touch screen and allows the user to provide one or more inputs for interacting with the watch body 820.

In some embodiments, the watch body 820 includes one or more sensors 821. The sensors 821 of the watch body 820 can be the same or distinct from the sensors 813 of the wearable band 810. The sensors 821 of the watch body 820 can be distributed on an inside and/or an outside surface of the watch body 820. In some embodiments, the sensors 821 are configured to contact a user's skin when the watch body 820 is worn by the user. For example, the sensors 821 can be placed on the bottom side of the watch body 820 and the coupling mechanism 816 can be a cradle with an opening that allows the bottom side of the watch body 820 to directly contact the user's skin. Alternatively, in some embodiments, the watch body 820 does not include sensors that are configured to contact the user's skin (e.g., including sensors internal and/or external to the watch body 820 that configured to sense data of the watch body 820 and the watch body 820's surrounding environment). In some embodiments, the sensors 813 are configured to track a position and/or motion of the watch body 820.

The watch body 820 and the wearable band 810 can share data using a wired communication method (e.g., a Universal Asynchronous Receiver/Transmitter (UART), a USB transceiver, etc.) and/or a wireless communication method (e.g., near field communication, Bluetooth, etc.). For example, the watch body 820 and the wearable band 810 can share data sensed by the sensors 813 and 821, as well as application- and device-specific information (e.g., active and/or available applications), output devices (e.g., display, speakers, etc.), input devices (e.g., touch screen, microphone, imaging sensors, etc.).

In some embodiments, the watch body 820 can include, without limitation, a front-facing camera 825A and/or a rear-facing camera 825B, sensors 821 (e.g., a biometric sensor, an IMU sensor, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 863; Figure 8B), a touch sensor, a sweat sensor, etc.). In some embodiments, the watch body 820 can include one or more haptic devices 876 (Figure 8B; a vibratory haptic actuator) that is configured to provide haptic feedback (e.g., a cutaneous and/or kinesthetic sensation, etc.) to the user. The sensors 821 and/or the haptic device 876 can also be configured to operate in conjunction with multiple applications including, without limitation, health-monitoring applications, social media applications, game applications, and artificial-reality applications (e.g., the applications associated with artificial reality).

As described above, the watch body 820 and the wearable band 810, when coupled, can form the wrist-wearable device 800. When coupled, the watch body 820 and wearable band 810 operate as a single device to execute functions (operations, detections, communications, etc.) described herein. In some embodiments, each device is provided with particular instructions for performing the one or more operations of the wrist-wearable device 800. For example, in accordance with a determination that the watch body 820 does not include neuromuscular signal sensors, the wearable band 810 can include alternative instructions for performing associated instructions (e.g., providing sensed neuromuscular signal data to the watch body 820 via a different electronic device). Operations of the wrist-wearable device 800 can be performed by the watch body 820 alone or in conjunction with the wearable band 810 (e.g., via respective processors and/or hardware components) and vice versa. In some embodiments, operations of the wrist-wearable device 800, the watch body 820, and/or the wearable band 810 can be performed in conjunction with one or more processors and/or hardware components of another communicatively coupled device (e.g., the HIPD 1000; Figures 10A-10B).

As described below with reference to the block diagram of Figure 8B, the wearable band 810 and/or the watch body 820 can each include independent resources required to independently execute functions. For example, the wearable band 810 and/or the watch body 820 can each include a power source (e.g., a battery), a memory, data storage, a processor (e.g., a central processing unit (CPU)), communications, a light source, and/or input/output devices.

Figure 8B shows block diagrams of a computing system 830 corresponding to the wearable band 810, and a computing system 860 corresponding to the watch body 820, according to some embodiments. A computing system of the wrist-wearable device 800 includes a combination of components of the wearable band computing system 830 and the watch body computing system 860, in accordance with some embodiments.

The watch body 820 and/or the wearable band 810 can include one or more components shown in watch body computing system 860. In some embodiments, a single integrated circuit includes all or a substantial portion of the components of the watch body computing system 860 are included in a single integrated circuit. Alternatively, in some embodiments, components of the watch body computing system 860 are included in a plurality of integrated circuits that are communicatively coupled. In some embodiments, the watch body computing system 860 is configured to couple (e.g., via a wired or wireless connection) with the wearable band computing system 830, which allows the computing systems to share components, distribute tasks, and/or perform other operations described herein (individually or as a single device).

The watch body computing system 860 can include one or more processors 879, a controller 877, a peripherals interface 861, a power system 895, and memory (e.g., a memory 880), each of which are defined above and described in more detail below.

The power system 895 can include a charger input 896, a power-management integrated circuit (PMIC) 897, and a battery 898, each are which are defined above. In some embodiments, a watch body 820 and a wearable band 810 can have respective charger inputs (e.g., charger input 896 and 857), respective batteries (e.g., battery 898 and 859), and can share power with each other (e.g., the watch body 820 can power and/or charge the wearable band 810, and vice versa). Although watch body 820 and/or the wearable band 810 can include respective charger inputs, a single charger input can charge both devices when coupled. The watch body 820 and the wearable band 810 can receive a charge using a variety of techniques. In some embodiments, the watch body 820 and the wearable band 810 can use a wired charging assembly (e.g., power cords) to receive the charge. Alternatively, or in addition, the watch body 820 and/or the wearable band 810 can be configured for wireless charging. For example, a portable charging device can be designed to mate with a portion of watch body 820 and/or wearable band 810 and wirelessly deliver usable power to a battery of watch body 820 and/or wearable band 810. The watch body 820 and the wearable band 810 can have independent power systems (e.g., power system 895 and 856) to enable each to operate independently. The watch body 820 and wearable band 810 can also share power (e.g., one can charge the other) via respective PMICs (e.g., PMICs 897 and 858) that can share power over power and ground conductors and/or over wireless charging antennas.

In some embodiments, the peripherals interface 861 can include one or more sensors 821, many of which listed below are defined above. The sensors 821 can include one or more coupling sensors 862 for detecting when the watch body 820 is coupled with another electronic device (e.g., a wearable band 810). The sensors 821 can include imaging sensors 863 (one or more of the cameras 825 and/or separate imaging sensors 863 (e.g., thermal-imaging sensors)). In some embodiments, the sensors 821 include one or more SpO2 sensors 864. In some embodiments, the sensors 821 include one or more biopotential-signal sensors (e.g., EMG sensors 865, which may be disposed on a user-facing portion of the watch body 820 and/or the wearable band 810). In some embodiments, the sensors 821 include one or more capacitive sensors 866. In some embodiments, the sensors 821 include one or more heart rate sensors 867. In some embodiments, the sensors 821 include one or more IMUs 868. In some embodiments, one or more IMUs 868 can be configured to detect movement of a user's hand or other location that the watch body 820 is placed or held.

In some embodiments, the peripherals interface 861 includes an NFC component 869, a global-position system (GPS) component 870, a long-term evolution (LTE) component 871, and/or a Wi-Fi and/or Bluetooth communication component 872. In some embodiments, the peripherals interface 861 includes one or more buttons 873 (e.g., the peripheral buttons 823 and 827 in Figure 8A), which, when selected by a user, cause operations to be performed at the watch body 820. In some embodiments, the peripherals interface 861 includes one or more indicators, such as a light emitting diode (LED), to provide a user with visual indicators (e.g., message received, low battery, an active microphone, and/or a camera, etc.).

The watch body 820 can include at least one display 805 for displaying visual representations of information or data to the user, including user-interface elements and/or three-dimensional (3D) virtual objects. The display can also include a touch screen for inputting user inputs, such as touch gestures, swipe gestures, and the like. The watch body 820 can include at least one speaker 874 and at least one microphone 875 for providing audio signals to the user and receiving audio input from the user. The user can provide user inputs through the microphone 875 and can also receive audio output from the speaker 874 as part of a haptic event provided by the haptic controller 878. The watch body 820 can include at least one camera 825, including a front-facing camera 825A and a rear-facing camera 825B. The cameras 825 can include ultra-wide-angle cameras, wide-angle cameras, fish-eye cameras, spherical cameras, telephoto cameras, a depth-sensing cameras, or other types of cameras.

The watch body computing system 860 can include one or more haptic controllers 878 and associated componentry (e.g., haptic devices 876) for providing haptic events at the watch body 820 (e.g., a vibrating sensation or audio output in response to an event at the watch body 820). The haptic controllers 878 can communicate with one or more haptic devices 876, such as electroacoustic devices, including a speaker of the one or more speakers 874 and/or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). The haptic controller 878 can provide haptic events to respective haptic actuators that are capable of being sensed by a user of the watch body 820. In some embodiments, the one or more haptic controllers 878 can receive input signals from an application of the applications 882.

In some embodiments, the computer system 830 and/or the computer system 860 can include memory 880, which can be controlled by a memory controller of the one or more controllers 877 and/or one or more processors 879. In some embodiments, software components stored in the memory 880 include one or more applications 882 configured to perform operations at the watch body 820. In some embodiments, the one or more applications 882 include games, word processors, messaging applications, calling applications, web browsers, social media applications, media streaming applications, financial applications, calendars, clocks, etc. In some embodiments, software components stored in the memory 880 include one or more communication interface modules 883 as defined above. In some embodiments, software components stored in the memory 880 include one or more graphics modules 884 for rendering, encoding, and/or decoding audio and/or visual data; and one or more data management modules 885 for collecting, organizing, and/or providing access to the data 887 stored in memory 880. In some embodiments, software components stored in the memory 880 include a gesture space module 886A, which is configured to perform the features described above in reference to Figures 1A-6. In some embodiments, one or more of applications 882 and/or one or more modules can work in conjunction with one another to perform various tasks at the watch body 820.

In some embodiments, software components stored in the memory 880 can include one or more operating systems 881 (e.g., a Linux-based operating system, an Android operating system, etc.). The memory 880 can also include data 887. The data 887 can include profile data 888A, sensor data 889A, media content data 890, application data 891, and gesture space data 892A, which stores data related to the performance of the features described above in reference to Figures 1A-6.

It should be appreciated that the watch body computing system 860 is an example of a computing system within the watch body 820, and that the watch body 820 can have more or fewer components than shown in the watch body computing system 860, combine two or more components, and/or have a different configuration and/or arrangement of the components. The various components shown in watch body computing system 860 are implemented in hardware, software, firmware, or a combination thereof, including one or more signal processing and/or application-specific integrated circuits.

Turning to the wearable band computing system 830, one or more components that can be included in the wearable band 810 are shown. The wearable band computing system 830 can include more or fewer components than shown in the watch body computing system 860, combine two or more components, and/or have a different configuration and/or arrangement of some or all of the components. In some embodiments, all, or a substantial portion of the components of the wearable band computing system 830 are included in a single integrated circuit. Alternatively, in some embodiments, components of the wearable band computing system 830 are included in a plurality of integrated circuits that are communicatively coupled. As described above, in some embodiments, the wearable band computing system 830 is configured to couple (e.g., via a wired or wireless connection) with the watch body computing system 860, which allows the computing systems to share components, distribute tasks, and/or perform other operations described herein (individually or as a single device).

The wearable band computing system 830, similar to the watch body computing system 860, can include one or more processors 849, one or more controllers 847 (including one or more haptics controller 848), a peripherals interface 831 that can include one or more sensors 813 and other peripheral devices, power source (e.g., a power system 856), and memory (e.g., a memory 850) that includes an operating system (e.g., an operating system 851), data (e.g., data 854 including profile data 888B, sensor data 889B, gesture space data 892B, etc.), and one or more modules (e.g., a communications interface module 852, a data management module 853, a gesture space module 886B, etc.).

The one or more sensors 813 can be analogous to sensors 821 of the computer system 860 in light of the definitions above. For example, sensors 813 can include one or more coupling sensors 832, one or more SpO2 sensors 834, one or more EMG sensors 835, one or more capacitive sensors 836, one or more heart rate sensors 837, and one or more IMU sensors 838.

The peripherals interface 831 can also include other components analogous to those included in the peripheral interface 861 of the computer system 860, including an NFC component 839, a GPS component 840, an LTE component 841, a Wi-Fi and/or Bluetooth communication component 842, and/or one or more haptic devices 876 as described above in reference to peripherals interface 861. In some embodiments, the peripherals interface 831 includes one or more buttons 843, a display 833, a speaker 844, a microphone 845, and a camera 855. In some embodiments, the peripherals interface 831 includes one or more indicators, such as an LED.

It should be appreciated that the wearable band computing system 830 is an example of a computing system within the wearable band 810, and that the wearable band 810 can have more or fewer components than shown in the wearable band computing system 830, combine two or more components, and/or have a different configuration and/or arrangement of the components. The various components shown in wearable band computing system 830 can be implemented in one or a combination of hardware, software, and firmware, including one or more signal processing and/or application-specific integrated circuits.

The wrist-wearable device 800 with respect to Figures 8A is an example of the wearable band 810 and the watch body 820 coupled, so the wrist-wearable device 800 will be understood to include the components shown and described for the wearable band computing system 830 and the watch body computing system 860. In some embodiments, wrist-wearable device 800 has a split architecture (e.g., a split mechanical architecture or a split electrical architecture) between the watch body 820 and the wearable band 810. In other words, all of the components shown in the wearable band computing system 830 and the watch body computing system 860 can be housed or otherwise disposed in a combined watch device 800, or within individual components of the watch body 820, wearable band 810, and/or portions thereof (e.g., a coupling mechanism 816 of the wearable band 810).

The techniques described above can be used with any device for sensing neuromuscular signals, including the arm-wearable devices of Figure 8A-8B, but could also be used with other types of wearable devices for sensing neuromuscular signals (such as body-wearable or head-wearable devices that might have neuromuscular sensors closer to the brain or spinal column).

In some embodiments, a wrist-wearable device 800 can be used in conjunction with a head-wearable device described below (e.g., AR device 900 and VR device 910) and/or an HIPD 1000, and the wrist-wearable device 800 can also be configured to be used to allow a user to control aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable device, attention will now be turned to example head-wearable devices, such AR device 900 and VR device 910.

### Example Head-Wearable Devices

Figures 9A- 9C show example head-wearable devices, in accordance with some embodiments. Head-wearable devices can include, but are not limited to, AR devices 910 (e.g., AR or smart eyewear devices, such as smart glasses, smart monocles, smart contacts, etc.), VR devices 910 (e.g., VR headsets, head-mounted displays (HMD)s, etc.), or other ocularly coupled devices. The AR devices 900 and the VR devices 910 are instances of the head-wearable devices 104 described in reference to Figures 1A-6 herein, such that the head-wearable device 104 should be understood to have the features of the AR devices 900 and/or the VR devices 910, and vice versa. The AR devices 900 and the VR devices 910 can perform various functions and/or operations associated with navigating through user interfaces and selectively opening applications, as well as the functions and/or operations described above with reference to Figures 1A-6.

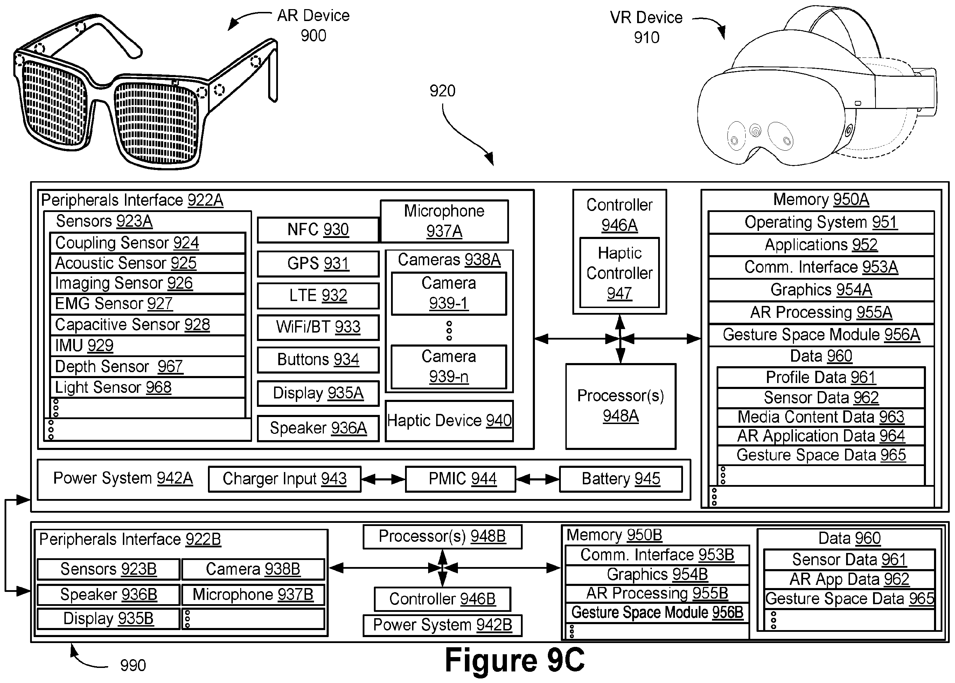

In some embodiments, an AR system (e.g., AR systems 700a and 700b; Figures 7A and 7B) includes an AR device 900 (as shown in Figure 9A) and/or VR device 910 (as shown in Figures 9B-1-B-2). In some embodiments, the AR device 900 and the VR device 910 can include one or more analogous components (e.g., components for presenting interactive artificial-reality environments, such as processors, memory, and/or presentation devices, including one or more displays and/or one or more waveguides), some of which are described in more detail with respect to Figure 9C. The head-wearable devices can use display projectors (e.g., display projector assemblies 907A and 907B) and/or waveguides for projecting representations of data to a user. Some embodiments of head-wearable devices do not include displays.

Figure 9A shows an example visual depiction of the AR device 900 (e.g., which may also be described herein as augmented-reality glasses and/or smart glasses). The AR device 900 can work in conjunction with additional electronic components that are not shown in Figures 9A, such as a wearable accessory device and/or an intermediary processing device, in electronic communication or otherwise configured to be used in conjunction with the AR device 900. In some embodiments, the wearable accessory device and/or the intermediary processing device may be configured to couple with the AR device 900 via a coupling mechanism in electronic communication with a coupling sensor 924, where the coupling sensor 924 can detect when an electronic device becomes physically or electronically coupled with the AR device 900. In some embodiments, the AR device 900 can be configured to couple to a housing (e.g., a portion of frame 904 or temple arms 905), which may include one or more additional coupling mechanisms configured to couple with additional accessory devices. The components shown in Figure 9A can be implemented in hardware, software, firmware, or a combination thereof, including one or more signal-processing components and/or application-specific integrated circuits (ASICs).

The AR device 900 includes mechanical glasses components, including a frame 904 configured to hold one or more lenses (e.g., one or both lenses 906-1 and 906-2). One of ordinary skill in the art will appreciate that the AR device 900 can include additional mechanical components, such as hinges configured to allow portions of the frame 904 of the AR device 900 to be folded and unfolded, a bridge configured to span the gap between the lenses 906-1 and 906-2 and rest on the user's nose, nose pads configured to rest on the bridge of the nose and provide support for the AR device 900, earpieces configured to rest on the user's ears and provide additional support for the AR device 900, temple arms 905 configured to extend from the hinges to the earpieces of the AR device 900, and the like. One of ordinary skill in the art will further appreciate that some examples of the AR device 900 can include none of the mechanical components described herein. For example, smart contact lenses configured to present artificial-reality to users may not include any components of the AR device 900.

The lenses 906-1 and 906-2 can be individual displays or display devices (e.g., a waveguide for projected representations). The lenses 906-1 and 906-2 may act together or independently to present an image or series of images to a user. In some embodiments, the lenses 906-1 and 906-2 can operate in conjunction with one or more display projector assemblies 907A and 907B to present image data to a user. While the AR device 900 includes two displays, embodiments of this disclosure may be implemented in AR devices with a single near-eye display (NED) or more than two NEDs.

The AR device 900 includes electronic components, many of which will be described in more detail below with respect to Figure 9C. Some example electronic components are illustrated in Figure 9A, including sensors 923-1, 923-2, 923-3,. 923-4, 923-5, and 923-6, which can be distributed along a substantial portion of the frame 904 of the AR device 900. The different types of sensors are described below in reference to Figure 9C. The AR device 900 also includes a left camera 939A and a right camera 939B, which are located on different sides of the frame 904. And the eyewear device includes one or more processors 948A and 948B (e.g., an integral microprocessor, such as an ASIC) that is embedded into a portion of the frame 904.

Figures 9B-1 and 9B-2 show an example visual depiction of the VR device 910 (e.g., a head-mounted display (HMD) 912, also referred to herein as an artificial-reality headset, a head-wearable device, a VR headset, etc.). The HMD 912 includes a front body 914 and a frame 916 (e.g., a strap or band) shaped to fit around a user's head. In some embodiments, the front body 914 and/or the frame 916 includes one or more electronic elements for facilitating presentation of and/or interactions with an AR and/or VR system (e.g., displays, processors (e.g., processor 948A-1), IMUs, tracking emitter or detectors, sensors, etc.). In some embodiments, the HMD 912 includes output audio transducers (e.g., an audio transducer 918-1), as shown in Figure 9B-2. In some embodiments, one or more components, such as the output audio transducer(s) 918-1 and the frame 916, can be configured to attach and detach (e.g., are detachably attachable) to the HMD 912 (e.g., a portion or all of the frame 916, and/or the output audio transducer 918-1), as shown in Figure 9B-2. In some embodiments, coupling a detachable component to the HMD 912 causes the detachable component to come into electronic communication with the HMD 912. The VR device 910 includes electronic components, many of which will be described in more detail below with respect to Figure 9C

Figure 9B-1 to 9B-2 also show that the VR device 910 one or more cameras, such as the left camera 939A and the right camera 939B, which can be analogous to the left and right cameras on the frame 904 of the AR device 900. In some embodiments, the VR device 910 includes one or more additional cameras (e.g., cameras 939C and 939D), which can be configured to augment image data obtained by the cameras 939A and 939B by providing more information. For example, the camera 939C can be used to supply color information that is not discerned by cameras 939A and 939B. In some embodiments, one or more of the cameras 939A to 939D can include an optional IR cut filter configured to remove IR light from being received at the respective camera sensors.

The VR device 910 can include a housing 990 storing one or more components of the VR device 910 and/or additional components of the VR device 910. The housing 990 can be a modular electronic device configured to couple with the VR device 910 (or an AR device 900) and supplement and/or extend the capabilities of the VR device 910 (or an AR device 900). For example, the housing 990 can include additional sensors, cameras, power sources, processors (e.g., processor 948A-2), etc. to improve and/or increase the functionality of the VR device 910. Examples of the different components included in the housing 990 are described below in reference to Figure 9C.

Alternatively or in addition, in some embodiments, the head-wearable device, such as the VR device 910 and/or the AR device 900), includes, or is communicatively coupled to, another external device (e.g., a paired device), such as an HIPD 1000 (discussed below in reference to Figures 10A-10B) and/or an optional neckband. The optional neckband can couple to the head-wearable device via one or more connectors (e.g., wired or wireless connectors). The head-wearable device and the neckband can operate independently without any wired or wireless connection between them. In some embodiments, the components of the head-wearable device and the neckband are located on one or more additional peripheral devices paired with the head-wearable device, the neckband, or some combination thereof. Furthermore, the neckband is intended to represent any suitable type or form of paired device. Thus, the following discussion of neckband may also apply to various other paired devices, such as smart watches, smart phones, wrist bands, other wearable devices, hand-held controllers, tablet computers, or laptop computers.

In some situations, pairing external devices, such as an intermediary processing device (e.g., an HIPD device 1000, an optional neckband, and/or wearable accessory device) with the head-wearable devices (e.g., an AR device 900 and/or VR device 910) enables the head-wearable devices to achieve a similar form factor of a pair of glasses while still providing sufficient battery and computation power for expanded capabilities. Some, or all, of the battery power, computational resources, and/or additional features of the head-wearable devices can be provided by a paired device or shared between a paired device and the head-wearable devices, thus reducing the weight, heat profile, and form factor of the head-wearable devices overall while allowing the head-wearable devices to retain its desired functionality. For example, the intermediary processing device (e.g., the HIPD 1000) can allow components that would otherwise be included in a head-wearable device to be included in the intermediary processing device (and/or a wearable device or accessory device), thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on the head-wearable devices, standing alone. Because weight carried in the intermediary processing device can be less invasive to a user than weight carried in the head-wearable devices, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

In some embodiments, the intermediary processing device is communicatively coupled with the head-wearable device and/or to other devices. The other devices may provide certain functions (e.g., tracking, localizing, depth mapping, processing, storage, etc.) to the head-wearable device. In some embodiments, the intermediary processing device includes a controller and a power source. In some embodiments, sensors of the intermediary processing device are configured to sense additional data that can be shared with the head-wearable devices in an electronic format (analog or digital).

The controller of the intermediary processing device processes information generated by the sensors on the intermediary processing device and/or the head-wearable devices. The intermediary processing device, like an HIPD 1000, can process information generated by one or more sensors of its sensors and/or information provided by other communicatively coupled devices. For example, a head-wearable device can include an IMU, and the intermediary processing device (neckband and/or an HIPD 1000) can compute all inertial and spatial calculations from the IMUs located on the head-wearable device. Additional examples of processing performed by a communicatively coupled device, such as the HIPD 1000, are provided below in reference to Figures 10A and 10B.

Artificial-reality systems may include a variety of types of visual feedback mechanisms. For example, display devices in the AR devices 900 and/or the VR devices 910 may include one or more liquid-crystal displays (LCDs), light emitting diode (LED) displays, organic LED (OLED) displays, and/or any other suitable type of display screen. Artificial-reality systems may include a single display screen for both eyes or may provide a display screen for each eye, which may allow for additional flexibility for varifocal adjustments or for correcting a refractive error associated with the user's vision. Some artificial-reality systems also include optical subsystems having one or more lenses (e.g., conventional concave or convex lenses, Fresnel lenses, or adjustable liquid lenses) through which a user may view a display screen. In addition to or instead of using display screens, some artificial-reality systems include one or more projection systems. For example, display devices in the AR device 900 and/or the VR device 910 may include micro-LED projectors that project light (e.g., using a waveguide) into display devices, such as clear combiner lenses that allow ambient light to pass through. The display devices may refract the projected light toward a user's pupil and may enable a user to simultaneously view both artificial-reality content and the real world. Artificial-reality systems may also be configured with any other suitable type or form of image projection system. As noted, some AR systems may, instead of blending an artificial reality with actual reality, substantially replace one or more of a user's sensory perceptions of the real world with a virtual experience.

While the example head-wearable devices are respectively described herein as the AR device 900 and the VR device 910, either or both of the example head-wearable devices described herein can be configured to present fully-immersive VR scenes presented in substantially all of a user's field of view, additionally or alternatively to, subtler augmented-reality scenes that are presented within a portion, less than all, of the user's field of view.

In some embodiments, the AR device 900 and/or the VR device 910 can include haptic feedback systems. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback can be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices (e.g., wrist-wearable devices which may be incorporated into headwear, gloves, body suits, handheld controllers, environmental devices (e.g., chairs or floormats), and/or any other type of device or system, such as a wrist-wearable device 800, an HIPD 1000, smart textile-based garment (not shown), etc.), and/or other devices described herein.

Figure 9C illustrates a computing system 920 and an optional housing 990, each of which show components that can be included in a head-wearable device (e.g., the AR device 900 and/or the VR device 910). In some embodiments, more or less components can be included in the optional housing 990 depending on practical restraints of the respective head-wearable device being described. Additionally or alternatively, the optional housing 990 can include additional components to expand and/or augment the functionality of a head-wearable device.

In some embodiments, the computing system 920 and/or the optional housing 990 can include one or more peripheral interfaces 922A and 922B, one or more power systems 942A and 942B (including charger input 943, PMIC 944, and battery 945), one or more controllers 946A 946B (including one or more haptic controllers 947), one or more processors 948A and 948B (as defined above, including any of the examples provided), and memory 950A and 950B, which can all be in electronic communication with each other. For example, the one or more processors 948A and/or 948B can be configured to execute instructions stored in the memory 950A and/or 950B, which can cause a controller of the one or more controllers 946A and/or 946B to cause operations to be performed at one or more peripheral devices of the peripherals interfaces 922A and/or 922B. In some embodiments, each operation described can occur based on electrical power provided by the power system 942A and/or 942B.

In some embodiments, the peripherals interface 922A can include one or more devices configured to be part of the computing system 920, many of which have been defined above and/or described with respect to wrist-wearable devices shown in Figures 8A and 8B. For example, the peripherals interface can include one or more sensors 923A. Some example sensors include: one or more coupling sensors 924, one or more acoustic sensors 925, one or more imaging sensors 926, one or more EMG sensors 927, one or more capacitive sensors 928, and/or one or more IMUs 929. In some embodiments, the sensors 923A further include depth sensors 967, light sensors 968 and/or any other types of sensors defined above or described with respect to any other embodiments discussed herein.

In some embodiments, the peripherals interface can include one or more additional peripheral devices, including one or more NFC devices 930, one or more GPS devices 931, one or more LTE devices 932, one or more WiFi and/or Bluetooth devices 933, one or more buttons 934 (e.g., including buttons that are slidable or otherwise adjustable), one or more displays 935A, one or more speakers 936A, one or more microphones 937A, one or more cameras 938A (e.g., including the a first camera 939-1 through nth camera 939-n, which are analogous to the left camera 939A and/or the right camera 939B), one or more haptic devices 940; and/or any other types of peripheral devices defined above or described with respect to any other embodiments discussed herein.

The head-wearable devices can include a variety of types of visual feedback mechanisms (e.g., presentation devices). For example, display devices in the AR device 900 and/or the VR device 910 can include one or more liquid-crystal displays (LCDs), light emitting diode (LED) displays, organic LED (OLED) displays, micro-LEDs, and/or any other suitable types of display screens. The head-wearable devices can include a single display screen (e.g., configured to be seen by both eyes), and/or can provide separate display screens for each eye, which can allow for additional flexibility for varifocal adjustments and/or for correcting a refractive error associated with the user's vision. Some embodiments of the head-wearable devices also include optical subsystems having one or more lenses (e.g., conventional concave or convex lenses, Fresnel lenses, or adjustable liquid lenses) through which a user can view a display screen. For example, respective displays 935A can be coupled to each of the lenses 906-1 and 906-2 of the AR device 900. The displays 935A coupled to each of the lenses 906-1 and 906-2 can act together or independently to present an image or series of images to a user. In some embodiments, the AR device 900 and/or the VR device 910 includes a single display 935A (e.g., a near-eye display) or more than two displays 935A.

In some embodiments, a first set of one or more displays 935A can be used to present an augmented-reality environment, and a second set of one or more display devices 935A can be used to present a virtual-reality environment. In some embodiments, one or more waveguides are used in conjunction with presenting artificial-reality content to the user of the AR device 900 and/or the VR device 910 (e.g., as a means of delivering light from a display projector assembly and/or one or more displays 935A to the user's eyes). In some embodiments, one or more waveguides are fully or partially integrated into the AR device 900 and/or the VR device 910. Additionally, or alternatively to display screens, some artificial-reality systems include one or more projection systems. For example, display devices in the AR device 900 and/or the VR device 910 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. The head-wearable devices can also be configured with any other suitable type or form of image projection system. In some embodiments, one or more waveguides are provided additionally or alternatively to the one or more display(s) 935A.

In some embodiments of the head-wearable devices, ambient light and/or a real-world live view (e.g., a live feed of the surrounding environment that a user would normally see) can be passed through a display element of a respective head-wearable device presenting aspects of the AR system. In some embodiments, ambient light and/or the real-world live view can be passed through a portion less than all, of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable devices, and an amount of ambient light and/or the real-world live view (e.g., 15-50% of the ambient light and/or the real-world live view) can be passed through the user interface element, such that the user can distinguish at least a portion of the physical environment over which the user interface element is being displayed.

The head-wearable devices can include one or more external displays 935A for presenting information to users. For example, an external display 935A can be used to show a current battery level, network activity (e.g., connected, disconnected, etc.), current activity (e.g., playing a game, in a call, in a meeting, watching a movie, etc.), and/or other relevant information. In some embodiments, the external displays 935A can be used to communicate with others. For example, a user of the head-wearable device can cause the external displays 935A to present a do not disturb notification. The external displays 935A can also be used by the user to share any information captured by the one or more components of the peripherals interface 922A and/or generated by head-wearable device (e.g., during operation and/or performance of one or more applications).

The memory 950A can include instructions and/or data executable by one or more processors 948A (and/or processors 948B of the housing 990) and/or a memory controller of the one or more controllers 946A (and/or controller 946B of the housing 990). The memory 950A can include one or more operating systems 951; one or more applications 952; one or more communication interface modules 953A; one or more graphics modules 954A; one or more AR processing modules 955A; gesture space module 956 (analogous to the gesture space module 886; Figure 8B); and/or any other types of modules or components defined above or described with respect to any other embodiments discussed herein.

The data 960 stored in memory 950A can be used in conjunction with one or more of the applications and/or programs discussed above. The data 960 can include profile data 961; sensor data 962; media content data 963; AR application data 964; gesture space module 965 (analogous to the gesture space data 892 Figure 8B); and/or any other types of data defined above or described with respect to any other embodiments discussed herein.

In some embodiments, the controller 946A of the head-wearable devices processes information generated by the sensors 923A on the head-wearable devices and/or another component of the head-wearable devices and/or communicatively coupled with the head-wearable devices (e.g., components of the housing 990, such as components of peripherals interface 922B). For example, the controller 946A can process information from the acoustic sensors 925 and/or image sensors 926. For each detected sound, the controller 946A can perform a direction of arrival (DOA) estimation to estimate a direction from which the detected sound arrived at a head-wearable device. As one or more of the acoustic sensors 925 detects sounds, the controller 946A can populate an audio data set with the information (e.g., represented by sensor data 962).

In some embodiments, a physical electronic connector can convey information between the head-wearable devices and another electronic device, and/or between one or more processors 948A of the head-wearable devices and the controller 946A. The information can be in the form of optical data, electrical data, wireless data, or any other transmittable data form. Moving the processing of information generated by the head-wearable devices to an intermediary processing device can reduce weight and heat in the eyewear device, making it more comfortable and safer for a user. In some embodiments, an optional accessory device (e.g., an electronic neckband or an HIPD 1000) is coupled to the head-wearable devices via one or more connectors. The connectors can be wired orwireless connectors and can include electrical and/or non-electrical (e.g., structural) components. In some embodiments, the head-wearable devices and the accessory device can operate independently without any wired or wireless connection between them.

The head-wearable devices can include various types of computer vision components and subsystems. For example, the AR device 900 and/or the VR device 910 can include one or more optical sensors such as two-dimensional (2D) or three-dimensional (3D) cameras, time-of-flight depth sensors, single-beam or sweeping laser rangefinders, 3D LiDAR sensors, and/or any other suitable type or form of optical sensor. A head-wearable device can process data from one or more of these sensors to identify a location of a user and/or aspects of the use's real-world physical surroundings, including the locations of real-world objects within the real-world physical surroundings. In some embodiments, the methods described herein are used to map the real world, to provide a user with context about real-world surroundings, and/or to generate interactable virtual objects (which can be replicas or digital twins of real-world objects that can be interacted with in AR environment), among a variety of other functions. For example, Figures 9B-1 and 9B-2 show the VR device 910 having cameras 939A-939D, which can be used to provide depth information for creating a voxel field and a two-dimensional mesh to provide object information to the user to avoid collisions.

The optional housing 990 can include analogous components to those describe above with respect to the computing system 920. For example, the optional housing 990 can include a respective peripherals interface 922B including more or less components to those described above with respect to the peripherals interface 922A. As described above, the components of the optional housing 990 can be used augment and/or expand on the functionality of the head-wearable devices. For example, the optional housing 990 can include respective sensors 923B, speakers 936B, displays 935B, microphones 937B, cameras 938B, and/or other components to capture and/or present data. Similarly, the optional housing 990 can include one or more processors 948B, controllers 946B, and/or memory 950B (including respective communication interface modules 953B; one or more graphics modules 954B; one or more AR processing modules 955B, etc.) that can be used individually and/or in conjunction with the components of the computing system 920.

The techniques described above in Figures 9A-9C can be used with different head-wearable devices. In some embodiments, the head-wearable devices (e.g., the AR device 900 and/or the VR device 910) can be used in conjunction with one or more wearable device such as a wrist-wearable device 800 (or components thereof), as well as an HIPD 1000. Having thus described example the head-wearable devices, attention will now be turned to example handheld intermediary processing devices, such as HIPD 1000.

### Example Handheld Intermediary Processing Devices

Figures 10A and 10B illustrate an example handheld intermediary processing device (HIPD) 1000, in accordance with some embodiments. The HIPD 1000 is an instance of the intermediary device described in reference to Figures 1A-6 herein, such that the HIPD 1000 should be understood to have the features described with respect to any intermediary device defined above or otherwise described herein, and vice versa. The HIPD 1000 can perform various functions and/or operations associated with navigating through user interfaces and selectively opening applications, as well as the functions and/or operations described above with reference to Figures 1A-6.

Figure 10A shows a top view 1005 and a side view 1025 of the HIPD 1000. The HIPD 1000 is configured to communicatively couple with one or more wearable devices (or other electronic devices) associated with a user. For example, the HIPD 1000 is configured to communicatively couple with a user's wrist-wearable device 800 (or components thereof, such as the watch body 820 and the wearable band 810), AR device 900, and/or VR device 910. The HIPD 1000 can be configured to be held by a user (e.g., as a handheld controller), carried on the user's person (e.g., in their pocket, in their bag, etc.), placed in proximity of the user (e.g., placed on their desk while seated at their desk, on a charging dock, etc.), and/or placed at or within a predetermined distance from a wearable device or other electronic device (e.g., where, in some embodiments, the predetermined distance is the maximum distance (e.g., 10 meters) at which the HIPD 1000 can successfully be communicatively coupled with an electronic device, such as a wearable device).

The HIPD 1000 can perform various functions independently and/or in conjunction with one or more wearable devices (e.g., wrist-wearable device 800, AR device 900, VR device 910, etc.). The HIPD 1000 is configured to increase and/or improve the functionality of communicatively coupled devices, such as the wearable devices. The HIPD 1000 is configured to perform one or more functions or operations associated with interacting with user interfaces and applications of communicatively coupled devices, interacting with an AR environment, interacting with VR environment, and/or operating as a human-machine interface controller, as well as functions and/or operations described above with reference to Figures 1A-6. Additionally, as will be described in more detail below, functionality and/or operations of the HIPD 1000 can include, without limitation, task offloading and/or handoffs; thermals offloading and/or handoffs; 6 degrees of freedom (6DoF) raycasting and/or gaming (e.g., using imaging devices or cameras 1014A and 1014B, which can be used for simultaneous localization and mapping (SLAM) and/or with other image processing techniques); portable charging; messaging; image capturing via one or more imaging devices or cameras (e.g., cameras 1022A and 1022B); sensing user input (e.g., sensing a touch on a multi-touch input surface 1002); wireless communications and/or interlining (e.g., cellular, near field, Wi-Fi, personal area network, etc.); location determination; financial transactions; providing haptic feedback; alarms; notifications; biometric authentication; health monitoring; sleep monitoring; etc. The above-example functions can be executed independently in the HIPD 1000 and/or in communication between the HIPD 1000 and another wearable device described herein. In some embodiments, functions can be executed on the HIPD 1000 in conjunction with an AR environment. As the skilled artisan will appreciate upon reading the descriptions provided herein, the novel the HIPD 1000 described herein can be used with any type of suitable AR environment.

While the HIPD 1000 is communicatively coupled with a wearable device and/or other electronic device, the HIPD 1000 is configured to perform one or more operations initiated at the wearable device and/or the other electronic device. In particular, one or more operations of the wearable device and/or the other electronic device can be offloaded to the HIPD 1000 to be performed. The HIPD 1000 performs the one or more operations of the wearable device and/or the other electronic device and provides to data corresponded to the completed operations to the wearable device and/or the other electronic device. For example, a user can initiate a video stream using AR device 900 and back-end tasks associated with performing the video stream (e.g., video rendering) can be offloaded to the HIPD 1000, which the HIPD 1000 performs and provides corresponding data to the AR device 900 to perform remaining front-end tasks associated with the video stream (e.g., presenting the rendered video data via a display of the AR device 900). In this way, the HIPD 1000, which has more computational resources and greater thermal headroom than a wearable device, can perform computationally intensive tasks for the wearable device improving performance of an operation performed by the wearable device.

The HIPD 1000 includes a multi-touch input surface 1002 on a first side (e.g., a front surface) that is configured to detect one or more user inputs. In particular, the multi-touch input surface 1002 can detect single tap inputs, multi-tap inputs, swipe gestures and/or inputs, force-based and/or pressure-based touch inputs, held taps, and the like. The multi-touch input surface 1002 is configured to detect capacitive touch inputs and/or force (and/or pressure) touch inputs. The multi-touch input surface 1002 includes a first touch-input surface 1004 defined by a surface depression, and a second touch-input surface 1006 defined by a substantially planar portion. The first touch-input surface 1004 can be disposed adjacent to the second touch-input surface 1006. In some embodiments, the first touch-input surface 1004 and the second touch-input surface 1006 can be different dimensions, shapes, and/or cover different portions of the multi-touch input surface 1002. For example, the first touch-input surface 1004 can be substantially circular and the second touch-input surface 1006 is substantially rectangular. In some embodiments, the surface depression of the multi-touch input surface 1002 is configured to guide user handling of the HIPD 1000. In particular, the surface depression is configured such that the user holds the HIPD 1000 upright when held in a single hand (e.g., such that the using imaging devices or cameras 1014A and 1014B are pointed toward a ceiling or the sky). Additionally, the surface depression is configured such that the user's thumb rests within the first touch-input surface 1004.

In some embodiments, the different touch-input surfaces include a plurality of touch-input zones. For example, the second touch-input surface 1006 includes at least a first touch-input zone 1008 within a second touch-input zone 1006 and a third touch-input zone 1010 within the first touch-input zone 1008. In some embodiments, one or more of the touch-input zones are optional and/or user defined (e.g., a user can specific a touch-input zone based on their preferences). In some embodiments, each touch-input surface and/or touch-input zone is associated with a predetermined set of commands. For example, a user input detected within the first touch-input zone 1008 causes the HIPD 1000 to perform a first command and a user input detected within the second touch-input zone 1006 causes the HIPD 1000 to perform a second command, distinct from the first. In some embodiments, different touch-input surfaces and/or touch-input zones are configured to detect one or more types of user inputs. The different touch-input surfaces and/or touch-input zones can be configured to detect the same or distinct types of user inputs. For example, the first touch-input zone 1008 can be configured to detect force touch inputs (e.g., a magnitude at which the user presses down) and capacitive touch inputs, and the second touch-input zone 1006 can be configured to detect capacitive touch inputs.

The HIPD 1000 includes one or more sensors 1051 for sensing data used in the performance of one or more operations and/or functions. For example, the HIPD 1000 can include an IMU that is used in conjunction with cameras 1014 for 3-dimensional object manipulation (e.g., enlarging, moving, destroying, etc. an object) in an AR or VR environment. Non-limiting examples of the sensors 1051 included in the HIPD 1000 include a light sensor, a magnetometer, a depth sensor, a pressure sensor, and a force sensor. Additional examples of the sensors 1051 are provided below in reference to Figure 10B.

The HIPD 1000 can include one or more light indicators 1012 to provide one or more notifications to the user. In some embodiments, the light indicators are LEDs or other types of illumination devices. The light indicators 1012 can operate as a privacy light to notify the user and/or others near the user that an imaging device and/or microphone are active. In some embodiments, a light indicator is positioned adjacent to one or more touch-input surfaces. For example, a light indicator can be positioned around the first touch-input surface 1004. The light indicators can be illuminated in different colors and/or patterns to provide the user with one or more notifications and/or information about the device. For example, a light indicator positioned around the first touch-input surface 1004 can flash when the user receives a notification (e.g., a message), change red when the HIPD 1000 is out of power, operate as a progress bar (e.g., a light ring that is closed when a task is completed (e.g., 0% to 100%)), operates as a volume indicator, etc.).

In some embodiments, the HIPD 1000 includes one or more additional sensors on another surface. For example, as shown Figure 10A, HIPD 1000 includes a set of one or more sensors (e.g., sensor set 1020) on an edge of the HIPD 1000. The sensor set 1020, when positioned on an edge of the of the HIPD 1000, can be pe positioned at a predetermined tilt angle (e.g., 26 degrees), which allows the sensor set 1020 to be angled toward the user when placed on a desk or other flat surface. Alternatively, in some embodiments, the sensor set 1020 is positioned on a surface opposite the multi-touch input surface 1002 (e.g., a back surface). The one or more sensors of the sensor set 1020 are discussed in detail below.

The side view 1025 of the of the HIPD 1000 shows the sensor set 1020 and camera 1014B. The sensor set 1020 includes one or more cameras 1022A and 1022B, a depth projector 1024, an ambient light sensor 1028, and a depth receiver 1030. In some embodiments, the sensor set 1020 includes a light indicator 1026. The light indicator 1026 can operate as a privacy indicator to let the user and/or those around them know that a camera and/or microphone is active. The sensor set 1020 is configured to capture a user's facial expression such that the user can puppet a custom avatar (e.g., showing emotions, such as smiles, laughter, etc., on the avatar or a digital representation of the user). The sensor set 1020 can be configured as a side stereo RGB system, a rear indirect Time-of-Flight (iToF) system, or a rear stereo RGB system. As the skilled artisan will appreciate upon reading the descriptions provided herein, the novel HIPD 1000 described herein can use different sensor set 1020 configurations and/or sensor set 1020 placement.

In some embodiments, the HIPD 1000 includes one or more haptic devices 1071 (Figure 10B; e.g., a vibratory haptic actuator) that are configured to provide haptic feedback (e.g., kinesthetic sensation). The sensors 1051, and/or the haptic devices 1071 can be configured to operate in conjunction with multiple applications and/or communicatively coupled devices including, without limitation, a wearable devices, health monitoring applications, social media applications, game applications, and artificial reality applications (e.g., the applications associated with artificial reality).

The HIPD 1000 is configured to operate without a display. However, in optional embodiments, the HIPD 1000 can include a display 1068 (Figure 10B). The HIPD 1000 can also income one or more optional peripheral buttons 1067 (Figure 10B). For example, the peripheral buttons 1067 can be used to turn on or turn off the HIPD 1000. Further, the HIPD 1000 housing can be formed of polymers and/or elastomer elastomers. The HIPD 1000 can be configured to have a non-slip surface to allow the HIPD 1000 to be placed on a surface without requiring a user to watch over the HIPD 1000. In other words, the HIPD 1000 is designed such that it would not easily slide off a surfaces. In some embodiments, the HIPD 1000 include one or magnets to couple the HIPD 1000 to another surface. This allows the user to mount the HIPD 1000 to different surfaces and provide the user with greater flexibility in use of the HIPD 1000.

As described above, the HIPD 1000 can distribute and/or provide instructions for performing the one or more tasks at the HIPD 1000 and/or a communicatively coupled device. For example, the HIPD 1000 can identify one or more back-end tasks to be performed by the HIPD 1000 and one or more front-end tasks to be performed by a communicatively coupled device. While the HIPD 1000 is configured to offload and/or handoff tasks of a communicatively coupled device, the HIPD 1000 can perform both back-end and front-end tasks (e.g., via one or more processors, such as CPU 1077; Figure 10B). The HIPD 1000 can, without limitation, can be used to perform augmenting calling (e.g., receiving and/or sending 3D or 2.5D live volumetric calls, live digital human representation calls, and/or avatar calls), discreet messaging, 6DoF portrait/landscape gaming, AR/VR object manipulation, AR/VR content display (e.g., presenting content via a virtual display), and/or other AR/VR interactions. The HIPD 1000 can perform the above operations alone or in conjunction with a wearable device (or other communicatively coupled electronic device).

Figure 10B shows block diagrams of a computing system 1040 of the HIPD 1000, in accordance with some embodiments. The HIPD 1000, described in detail above, can include one or more components shown in HIPD computing system 1040. The HIPD 1000 will be understood to include the components shown and described below for the HIPD computing system 1040. In some embodiments, all, or a substantial portion of the components of the HIPD computing system 1040 are included in a single integrated circuit. Alternatively, in some embodiments, components of the HIPD computing system 1040 are included in a plurality of integrated circuits that are communicatively coupled.

The HIPD computing system 1040 can include a processor (e.g., a CPU 1077, a GPU, and/or a CPU with integrated graphics), a controller 1075, a peripherals interface 1050 that includes one or more sensors 1051 and other peripheral devices, a power source (e.g., a power system 1095), and memory (e.g., a memory 1078) that includes an operating system (e.g., an operating system 1079), data (e.g., data 1088), one or more applications (e.g., applications 1080), and one or more modules (e.g., a communications interface module 1081, a graphics module 1082, a task and processing management module 1083, an interoperability module 1084, an AR processing module 1085, a data management module 1086, a gesture space module 1087, etc.). The HIPD computing system 1040 further includes a power system 1095 that includes a charger input and output 1096, a PMIC 1097, and a battery 1098, all of which are defined above.

In some embodiments, the peripherals interface 1050 can include one or more sensors 1051. The sensors 1051 can include analogous sensors to those described above in reference to Figures 8B. For example, the sensors 1051 can include imaging sensors 1054, (optional) EMG sensors 1056, IMUs 1058, and capacitive sensors 1060. In some embodiments, the sensors 1051 can include one or more pressure sensor 1052 for sensing pressure data, an altimeter 1053 for sensing an altitude of the HIPD 1000, a magnetometer 1055 for sensing a magnetic field, a depth sensor 1057 (or a time-of flight sensor) for determining a difference between the camera and the subject of an image, a position sensor 1059 (e.g., a flexible position sensor) for sensing a relative displacement or position change of a portion of the HI PD 1000, a force sensor 1061 for sensing a force applied to a portion of the HIPD 1000, and a light sensor 1062 (e.g., an ambient light sensor) for detecting an amount of lighting. The sensors 1051 can include one or more sensors not shown in Figure 10B.

Analogous to the peripherals described above in reference to Figures 8B, the peripherals interface 1050 can also include an NFC component 1063, a GPS component 1064, an LTE component 1065, a Wi-Fi and/or Bluetooth communication component 1066, a speaker 1069, a haptic device 1071, and a microphone 1073. As described above in reference to Figure 10A, the HIPD 1000 can optionally include a display 1068 and/or one or more buttons 1067. The peripherals interface 1050 can further include one or more cameras 1070, touch surfaces 1072, and/or one or more light emitters 1074. The multi-touch input surface 1002 described above in reference to Figure 10A is an example of touch surface 1072. The light emitters 1074 can be one or more LEDs, lasers, etc. and can be used to project or present information to a user. For example, the light emitters 1074 can include light indicators 1012 and 1026 described above in reference to Figure 10A. The cameras 1070 (e.g., cameras 1014A, 1014B, and 1022 described above in Figure 10A) can include one or more wide angle cameras, fish-eye cameras, spherical cameras, compound eye cameras (e.g., stereo and multi cameras), depth cameras, RGB cameras, ToF cameras, RGB-D cameras (depth and ToF cameras), and/or other available cameras. Cameras 1070 can be used for SLAM; 6 DoF ray casting, gaming, object manipulation, and/or other rendering; facial recognition and facial expression recognition, etc.

Similar to the watch body computing system 860 and the watch band computing system 830 described above in reference to Figure 8B, the HIPD computing system 1040 can include one or more haptic controllers 1076 and associated componentry (e.g., haptic devices 1071) for providing haptic events at the HIPD 1000.

Memory 1078 can include high-speed random-access memory and/or non-volatile memory, such as one or more magnetic disk storage devices, flash memory devices, or other non-volatile solid-state memory devices. Access to the memory 1078 by other components of the HIPD 1000, such as the one or more processors and the peripherals interface 1050, can be controlled by a memory controller of the controllers 1075.

In some embodiments, software components stored in the memory 1078 include one or more operating systems 1079, one or more applications 1080, one or more communication interface modules 1081, one or more graphics modules 1082, one or more data management modules 1085, which are analogous to the software components described above in reference to Figure 8B. The software components stored in the memory 1078 can also include a gesture space module 1087 (analogous to the gesture space module 886; Figure 8B).

In some embodiments, software components stored in the memory 1078 include a task and processing management module 1083 for identifying one or more front-end and back-end tasks associated with an operation performed by the user, performing one or more front-end and/or back-end tasks, and/or providing instructions to one or more communicatively coupled devices that cause performance of the one or more front-end and/or back-end tasks. In some embodiments, the task and processing management module 1083 uses data 1088 (e.g., device data 1090) to distribute the one or more front-end and/or back-end tasks based on communicatively coupled devices' computing resources, available power, thermal headroom, ongoing operations, and/or other factors. For example, the task and processing management module 1083 can cause the performance of one or more back-end tasks (of an operation performed at communicatively coupled AR device 900) at the HIPD 1000 in accordance with a determination that the operation is utilizing a predetermined amount (e.g., at least 70%) of computing resources available at the AR device 900.

In some embodiments, software components stored in the memory 1078 include an interoperability module 1084 for exchanging and utilizing information received and/or provided to distinct communicatively coupled devices. The interoperability module 1084 allows for different systems, devices, and/or applications to connect and communicate in a coordinated way without user input. In some embodiments, software components stored in the memory 1078 include an AR module 1085 that is configured to process signals based at least on sensor data for use in an AR and/or VR environment. For example, the AR processing module 1085 can be used for 3D object manipulation, gesture recognition, facial and facial expression, recognition, etc.

The memory 1078 can also include data 1087, including structured data. In some embodiments, the data 1087 can include profile data 1089, device data 1089 (including device data of one or more devices communicatively coupled with the HIPD 1000, such as device type, hardware, software, configurations, etc.), sensor data 1091, media content data 1092, application data 1093, and gesture space data 1094 (analogous to the gesture space data 892 Figure 8B).

It should be appreciated that the HIPD computing system 1040 is an example of a computing system within the HIPD 1000, and that the HIPD 1000 can have more or fewer components than shown in the HIPD computing system 1040, combine two or more components, and/or have a different configuration and/or arrangement of the components. The various components shown in HIPD computing system 1040 are implemented in hardware, software, firmware, or a combination thereof, including one or more signal processing and/or application-specific integrated circuits.

The techniques described above in Figure 10A-10B can be used with any device used as a human-machine interface controller. In some embodiments, an HIPD 1000 can be used in conjunction with one or more wearable device such as a head-wearable device (e.g., AR device 900 and VR device 910) and/or a wrist-wearable device 800 (or components thereof).

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt-in or opt-out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A non-transitory, computer-readable storage medium comprising instructions that, when executed by an electronic device, cause performance of operations for:
causing presentation of application content associated with an application to a user of a wrist-wearable device, the wrist-wearable device comprising a biopotential-signal-sensing component;
in response to receiving a first indication, based on data from the biopotential-signal-sensing component, that a thumb of the user is moving in a first direction on a portion of a hand of the user, causing presentation of different application content associated with the application; and
in response to receiving a second indication, based on data from the biopotential-signal-sensing component, that the thumb of the user is moving in a second direction, distinct from the first direction, on the portion of the hand of the user, causing presentation of other application content associated with another application, the other application distinct from the application.

2. The non-transitory, computer-readable storage medium of claim 1, wherein the first direction is substantially perpendicular to the second direction;
optionally, wherein:
the first direction is a horizontal direction starting along a major dimension of an index finger of the user; and
the second direction is a vertical direction starting along a minor dimension of the index finger of the user.

3. The non-transitory, computer-readable storage medium of claim 1 or claim 2,
wherein the other application content is caused to be presented with a focus selector directed to a selectable user interface element within the other application content, and
the instructions, when executed by the electronic device, further cause performance of operations for:
while the other application content is being presented to the user and the focus selector is directed to the selectable user interface element within the other application content:
in response to receiving a third indication, based on data from the biopotential-signal-sensing component, that the thumb of the user is providing a press contact against the portion of the hand of the user, causing performance of an operation associated with the selectable user interface element.

4. The non-transitory, computer-readable storage medium of claim 3, wherein the instructions, when executed by the electronic device, further cause performance of operations for:
while the other application content is being presented:
in conjunction with detecting the third indication that the thumb of the user is providing the press contact, causing an adjustment to a visual characteristic used to present the selectable user interface element as part of the other application content currently being displayed to the user.

5. The non-transitory, computer-readable storage medium of claim 4, wherein:
causing the adjustment to the visual characteristic used to present the selectable user interface element comprises causing presentation of a zoomed-in selection interface; and
the zoomed-in selection interface comprises selectable user interface elements associated with a set of actions presented within a user interface, comprising the selectable user interface element that remains in focus within the zoomed-in selection interface;
optionally, wherein the press contact by the thumb of the user against the portion of the hand of the user comprises a sustained hold of the press contact, and the instructions, when executed by the electronic device, further cause performance of operations for:
while the zoomed-in selection interface is caused to be presented to the user and the sustained hold of the press contact is being maintained, receiving an indication of a translational movement of the hand;
in response to receiving the indication of the translational movement of the hand, adjusting the zoomed-in selection interface such that the focus selector is no longer directed to the selectable user interface element that previously remained in focus, and the focus selector is caused to be directed to a different selectable user interface element within the zoomed-in selection interface; and
while the focus selector is directed to the different selectable user interface element within the zoomed-in selection interface, and in response to a release of the press contact, causing an operation to be performed corresponding to the different selectable user interface element.

6. The non-transitory, computer-readable storage medium of any one of claims 3 to 5, wherein the instructions, when executed by the electronic device, further cause performance of operations for:
while the other application content is being presented, and before causing performance of the operation associated with the selectable user interface element:
in response to receiving a fourth indication, via the biopotential-signal-sensing component, that the thumb of the user is providing a press contact against another portion of the hand of the user, distinct from the portion, causing performance of a secondary operation, distinct from the operation, associated with the selectable user interface element.

7. The non-transitory, computer-readable storage medium of any one of claims 3 to 6, wherein the instructions, when executed by the electronic device, further cause performance of operations for:
while the other application content is being caused to be presented to the user:
in response to receiving a fifth indication, based on a sensor distinct biopotential-signal-sensing component, of a translational movement of the hand, causing movement of the focus selector to be directed to a different selectable user interface element, distinct from the selectable user interface element, within the other application content;
optionally, wherein the movement of the focus selector based on receiving the fifth indication of the translational movement of the hand only becomes available to the user after the user has satisfied a predefined usage criterion.

8. The non-transitory, computer-readable storage medium of any preceding claim, wherein the instructions, when executed by the electronic device, further cause performance of operations for:
before causing presentation of the other application content associated with the other application:
the causing presentation of the different application content associated with the application comprises causing a scrolling operation within the application to reveal the different application content within the application.

9. The non-transitory, computer-readable storage medium of any preceding claim, and one or more of the following:
(i) wherein causing presentation comprises causing presentation of respective application content at a display of a wrist-wearable device;
(ii) wherein causing presentation comprises causing presentation of respective application content via an artificial-reality headset.

10. The non-transitory, computer-readable storage medium of any preceding claim, wherein the first indication and the second indication are further based on the thumb of the user remaining in contact with the portion of the hand of the user while the user is moving the thumb in the first and second directions.

11. The non-transitory, computer-readable storage medium of any preceding claim, wherein the first indication and the second indication are not provided in accordance with respective thumb movements that comprise contact with a touch-sensitive display of an electronic device.

12. A method of using thumb-based gestures to navigate within and between applications, the method comprising:
causing presentation of application content associated with an application to a user of a wrist-wearable device, the wrist-wearable device comprising a biopotential-signal-sensing component;
in response to receiving a first indication, based on data from the biopotential-signal-sensing component, that a thumb of the user is moving in a first direction on a portion of a hand of the user, causing presentation of different application content associated with the application; and
in response to receiving a second indication, based on data from the biopotential-signal-sensing component, that the thumb of the user is moving in a second direction, distinct from the first direction, on the portion of the hand of the user, causing presentation of other application content associated with another application, the other application distinct from the application.

13. The method of claim 12, wherein the first direction is substantially perpendicular to the second direction;
optionally, wherein:
the first direction is a horizontal direction starting along a major dimension of an index finger of the user; and
the second direction is a vertical direction starting along a minor dimension of the index finger of the user.

14. A wrist-wearable device, comprising:
one or more processors; and
memory comprising instructions that, when executed by the one or more processors, cause the wrist-wearable device to
cause presentation of application content associated with an application to a user of a wrist-wearable device, the wrist-wearable device comprising a biopotential-signal-sensing component;
in response to receiving a first indication, based on data from the biopotential-signal-sensing component, that a thumb of the user is moving in a first direction on a portion of a hand of the user, cause presentation of different application content associated with the application; and
in response to receiving a second indication, based on data from the biopotential-signal-sensing component, that the thumb of the user is moving in a second direction, distinct from the first direction, on the portion of the hand of the user, cause presentation of other application content associated with another application, the other application distinct from the application.

15. The wrist-wearable device of claim 14, wherein the first direction is substantially perpendicular to the second direction.
